# EUROPEAN PATENT APPLICATION

(11) **EP 4 733 911 A1**
(43) Date of publication of application: **29.04.2026**
(21) Application number: 23951222.1
(22) Date of filing: 08.09.2023
(51) Int. Cl.: G06F 3/04817

(54) **DISPLAY METHOD AND APPARATUS**

(71) Applicant: Honor Device Co., Ltd., Shenzhen, Guangdong 518040 (CN)
(72) Inventor: HUI, Kaidi, Shenzhen, Guangdong 518040 (CN)
(74) Representative: Isarpatent
(86) International application number: PCT/CN2023/117842
(87) International publication number: WO 2025/050403

(57) **Abstract**

Embodiments of this application relate to the field of terminal technologies, and provide a home screen display method and apparatus. The method includes: When a terminal device detects a combined scenario, for example, a scenario in which the terminal device displays a home screen, enters a settings application and performs screen rotation, sets a wallpaper, and exits a home screen application, and when it is determined that configuration change information sent by another module is not received, the terminal device may actively obtain the configuration change information. As a result, the home screen application can adaptively adjust a home screen layout based on a screen rotation direction, thereby reducing a layout anomaly.

## Description

### TECHNICAL FIELD

This application relates to the field of terminal technologies, and in particular, to a home screen display method and apparatus.

### BACKGROUND

With popularization and development of the Internet, people have increasingly diversified requirements on functions of terminal devices. For example, in order to satisfy a habit of a user using a terminal device, the terminal device may support the user to implement functions such as performing screen rotation, wallpaper setting, and the like.

However, when the terminal device displays a home screen, performs screen rotation and wallpaper setting in a settings application based on a user operation, and returns to a home screen application, the home screen application may have a layout anomaly.

### SUMMARY

Embodiments of this application provide a home screen display method and apparatus. When a terminal device may detect a combined scenario, for example, a scenario in which the terminal device displays a home screen, enters a settings application and performs screen rotation, sets a wallpaper, and exits a home screen application, the terminal device may actively initiate configuration change information, to enable a home screen layout to be adaptively adjusted based on a screen rotation direction, thereby reducing a layout anomaly.

According to a first aspect, an embodiment of this application provides a home screen display method. The method is applied to a terminal device, and includes: displaying a first interface at a first time point, where the first interface is a home screen, and a wallpaper of the first interface is a first image; displaying a second interface at a second time point, where the second interface includes a thumbnail of a second image, the second time point is later than the first time point, and a posture of the terminal device is not changed between the first time point and the second time point; displaying a third interface at a third time point in response to rotation of the terminal device, where the third interface is an interface obtained by adapting the second interface to rotation of a display, and the third time point is later than the second time point; setting the second image as a home screen wallpaper at a fourth time point based on an operation performed by a user on the thumbnail of the second image in the third interface, where the fourth time point is later than the third time point; and displaying a fourth interface at a fifth time point in response to an operation of the user returning to the home screen, where the fourth interface is an interface obtained by adapting the first interface to rotation of the display and changing the wallpaper to the second image, the fifth time point is later than the fourth time point, a home screen application is not started again between the third time point and the fourth time point, the home screen application does not receive, between the fourth time point and the fifth time point, configuration change information sent by another module, and the home screen application receives, between the third time point and the fourth time point, configuration change information.

When the second interface is an interface displayed when the terminal device is in a landscape mode, the third interface may be an interface displayed when the terminal device is in a portrait mode. Alternatively, when the second interface is an interface displayed when the terminal device is in a portrait mode, the third interface may be an interface displayed when the terminal device is in a landscape mode.

The posture of the terminal device being not changed may be understood as that a rotation state (a landscape state or a portrait state) of the terminal device is not changed.

Based on this, when the terminal device may detect a combined scenario, for example, a scenario in which the terminal device displays a home screen, enters a settings application and performs screen rotation, sets the wallpaper, and exits the home screen application, and when it is determined that the configuration change information sent by the another module is not received, the terminal device may actively obtain the configuration change information. As a result, the home screen application can adaptively adjust a home screen layout based on a screen rotation direction, thereby reducing a layout anomaly.

In a possible implementation, the terminal device is a first device having an outward-foldable screen, the fourth interface is an interface displayed on a first screen of the outward-foldable screen, and after the displaying a fourth interface, the method further includes: displaying a fifth interface on the first screen at a sixth time point, where the fifth interface includes a thumbnail of the first image, and the sixth time point is later than the fifth time point; displaying a sixth interface on a second screen at a seventh time point in response to an operation of folding the first device, where the sixth interface is an interface obtained by adapting the fifth interface to folding of the display, the second screen is a portion of the first screen, and the seventh time point is later than the sixth time point; setting the first image as the home screen wallpaper at an eighth time point based on an operation performed by the user on the thumbnail of the first image in the sixth interface, where the eighth time point is later than the seventh time point; and displaying a seventh interface at a ninth time point in response to an operation of the user returning to the home screen, where the seventh interface is an interface obtained by adapting the fourth interface to folding of the display and changing the wallpaper to the first image, the ninth time point is later than the eighth time point, the home screen application is not started again between the seventh time point and the eighth time point, the home screen application does not receive, between the eighth time point and the ninth time point, the configuration change information sent by the another module, and the home screen application receives, between the seventh time point and the eighth time point, the configuration change information.

In this way, when the terminal device is the first device having the outward-foldabe screen and the first device may detect the combined scenario, for example, a scenario in which the terminal device displays the home screen, folds the screen (or understood as switching device from the unfolded state to the folded state), enters the settings application and sets the wallpaper, and exits the home screen application, and when it is determined that the configuration change information sent by the another module is not received, the terminal device may actively obtain the configuration change information. As a result, the home screen application can adaptively adjust the home screen layout based on a screen folding direction, thereby reducing the layout anomaly.

In a possible implementation, the second interface includes a thumbnail of the first image, the thumbnail of the first image includes a selected mark, and the thumbnail of the second image does not include the selected mark.

In a possible implementation, a system service and the home screen application are configured in the terminal device. After the response to rotation of the terminal device, the method further includes: The system service initiates a first instruction to the home screen application, where the first instruction includes information for indicating screen rotation, and a type of a configchange object in the first instruction is a non-resource change type. After the operation performed by the user on the thumbnail of the second image in the third interface, the method further includes: The system service initiates a second instruction to the home screen application, where the second instruction includes the configuration change information, and a type of a configchange object in the second instruction is a resource change type; and the home screen application sets a first flag bit to true.

In this way, the terminal device may distinguish, based on the first flag bit, the type of the configchange object during invoking of a sendconfigchange() invocation. This reduces a case in which the system service cannot actively initiate the sendconfigchange() invocation to the home screen application because subsequent configuration items are set in the home screen application.

In a possible implementation, that the home screen application sets a first flag bit to true includes: The home screen application sets the first flag bit to true based on the type of the configchange object in the second instruction being the resource change type.

In a possible implementation, after the response to an operation of the user returning to the home screen, the method further includes: The home screen application obtains the configuration change information based on the first flag bit being true, and displays the fourth interface based on the configuration change information; and after the home screen application obtains the configuration change information, the home screen application sets the first flag bit to false.

In this way, the terminal device may distinguish, based on the first flag bit, the type of the configchange object during invoking of a sendconfigchange() invocation. This reduces a case in which the system service cannot actively initiate the sendconfigchange() invocation to the home screen application because the configuration items are set in the home screen application. Further, the terminal device may set the first flag bit to false, to avoid affecting the determining of the first flag bit next time and ensure accuracy of the solution.

In a possible implementation, a configuration item is configured in the home screen application, and before the home screen application obtains the configuration change information, the method further includes: The system service notifies the home screen application to start the home screen; the system service obtains the configuration of the home screen application from the home screen application; and the system service does not send the configuration change information to the home screen application based on the configuration item being included in the configuration in the home screen application.

In a possible implementation, before the displaying a first interface, the method further includes: displaying an eighth interface at a tenth time point, where the eighth interface includes a first button for confirming setting gesture navigation; setting the gesture navigation in response to an operation performed on the first button; displaying a ninth interface at an eleventh time point, where the ninth interface includes a second button for completing a startup wizard, and the eleventh time point is later than the tenth time point; the terminal device starts the home screen application at a twelfth time point in response to an operation performed on the second button, where the twelfth time point is later than the eleventh time point; and completing, starting of the home screen application at a thirteenth time point, where the home screen application is not started again between the twelfth time point and the thirteenth time point, and the home screen application does not receive, between the twelfth time point and the thirteenth time point, the configuration change information sent by the another module.

In this way, the terminal device can determine that between the twelfth time point and the thirteenth time point, the home screen application is not started again during starting of the home screen application because the home screen application does not receive the configuration change information sent by the another module. This prevents the home screen application from writing dirty data to a home screen database when the home screen application is started for a second time.

In a possible implementation, the system service and the home screen application are configured in the terminal device, and the configuration item is configured in the home screen application. After the twelfth time point, the method further includes: The system service notifies the home screen application to start the home screen; the system service obtains the configuration of the home screen application from the home screen application; and the system service does not send the configuration change information to the home screen application based on the configuration item being included in the configuration in the home screen application.

In this way, the terminal device may reduce, by setting the configuration item in the home screen application, a case in which the home screen application is started again during the starting of the home screen in response to the operation performed on the first button.

According to a second aspect, an embodiment of this application provides a home screen display apparatus. The home screen display apparatus includes a processing unit and a display unit. The display unit is configured to display a first interface at a first time point, where the first interface is a home screen, and a wallpaper of the first interface is a first image. The display unit is further configured to display a second interface at a second time point, where the second interface includes a thumbnail of a second image, the second time point is later than the first time point, and a posture of the terminal device is not changed between the first time point and the second time point. The display unit is configured to display a third interface at a third time point in response to rotation of the terminal device, where the third interface is an interface obtained by adapting the second interface to rotation of the display, and the third time point is later than the second time point. The processing unit is configured to set, based on an operation performed by a user on a thumbnail of the second image in the third interface, the second image as a home screen wallpaper at a fourth time point, where the fourth time point is later than the third time point. The display unit is configured to display a fourth interface at a fifth time point in response to an operation of the user returning to the home screen, where the fourth interface is an interface obtained by adapting the first interface to rotation of the display and changing the wallpaper to the second image, the fifth time point is later than the fourth time point, a home screen application is not started again between the third time point and the fourth time point, the home screen application does not receive, between the fourth time point and the fifth time point, configuration change information sent by another module, and the home screen application receives, between the third time point and the fourth time point, configuration change information.

According to a third aspect, an embodiment of this application provides a terminal device, including a processor and a memory, the processor is configured to invoke and execute the computer program, to enable the terminal device to perform the method according to the first aspect or any implementation of the first aspect.

According to a fourth aspect, an embodiment of this application provides a computer-readable storage medium. The computer-readable storage medium stores instructions. When the instructions are executed, a computer is enabled to perform the method according to the first aspect or any implementation of the first aspect.

According to a fifth aspect, a computer program product is provided, including a computer program. When the computer program is run, a computer is enabled to perform the method according to the first aspect or any implementation of the first aspect.

It should be understood that the technical solutions of the second aspect to the fifth aspect of this application correspond to the technical solutions of the first aspect of this application, and beneficial effects achieved by the aspects and corresponding feasible implementations are similar. Details are not described herein again.

### BRIEF DESCRIPTION OF THE DRAWING

FIG. 1 is a schematic diagram of a hardware structure of a terminal device according to an embodiment of this application;
FIG. 2 is a schematic diagram of a software structure of a terminal device according to an embodiment of this application;
FIG. 3A to FIG. 3D are a schematic diagram of an interface for setting a startup wizard according to an embodiment of this application;
FIG. 4 is a schematic flowchart of a method for starting a home screen according to an embodiment of this application;
FIG. 5 is a schematic flowchart of another method for starting a home screen according to an embodiment of this application;
FIG. 6A to FIG. 6D are a schematic diagram of an interface of a layout anomaly of a home screen according to an embodiment of this application;
FIG. 7A to FIG. 7D are a schematic diagram of another interface of a layout anomaly of a home screen according to an embodiment of this application;
FIG. 8A and FIG. 8B are a schematic flowchart of a still another method for starting a home screen according to an embodiment of this application;
FIG. 9A to FIG. 9C are a schematic flowchart of a yet another method for starting a home screen according to an embodiment of this application;
FIG. 10 is a schematic flowchart of an interface display method according to an embodiment of this application; and
FIG. 11 is a schematic diagram of a structure of a home screen display apparatus according to an embodiment of this application; and
FIG. 12 is a schematic diagram of a hardware structure of another terminal device according to an embodiment of this application.

### DESCRIPTION OF EMBODMENETS

To clearly describe the technical solutions in embodiments of this application, terms such as "first" and "second" are used in embodiments of this application to distinguish between same items or similar items that provide basically same functions or purposes. For example, a first value and a second value are merely used to distinguish between different preset values, and are not intended to limit a sequence thereof. A person skilled in the art may understand that the words such as "first" and "second" do not limit a number or an execution sequence, and the words such as "first" and "second" do not indicate a definite difference.

It should be noted that, in this application, the word such as "example" or "for example" is used to represent giving an example, an illustration, or a description. Any embodiment or design scheme described as an "example" or "for example" in this application should not be explained as being more preferred or having more advantages than another embodiment or design scheme. More exactly, the use of words such as "an example" or "for example" is intended to present concepts in a specific manner.

In this application, "at least one" means one or more, and "plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" generally indicates that the associated objects are in an "or" relationship. "At least one of the following items (pieces)" or similar expressions indicate any combination of these items, including any combination of a singular item (piece) or plural items (pieces). For example, at least one item (piece) of a, b, or c may represent: a, b, c, a and b, a and c, b and c, or a, b, and c, where a, b, and c may be singular or plural.

A terminal device may be referred to as a terminal (terminal), user equipment (user equipment, UE), a mobile station (mobile station, MS), a mobile terminal (mobile terminal, MT), or the like. The terminal device may be a mobile phone having a touch screen, a wearable device, a tablet computer (Pad), a computer having a wireless transceiver function, or the like. The mobile phone may include: a foldable mobile phone or a large-screen mobile phone. The foldable mobile phone includes: a mobile phone having an outward-foldable screen, a mobile phone having an inward-foldable screen, or the like. Embodiments of this application impose no limitation on a specific technology and a specific device form used by the terminal device.

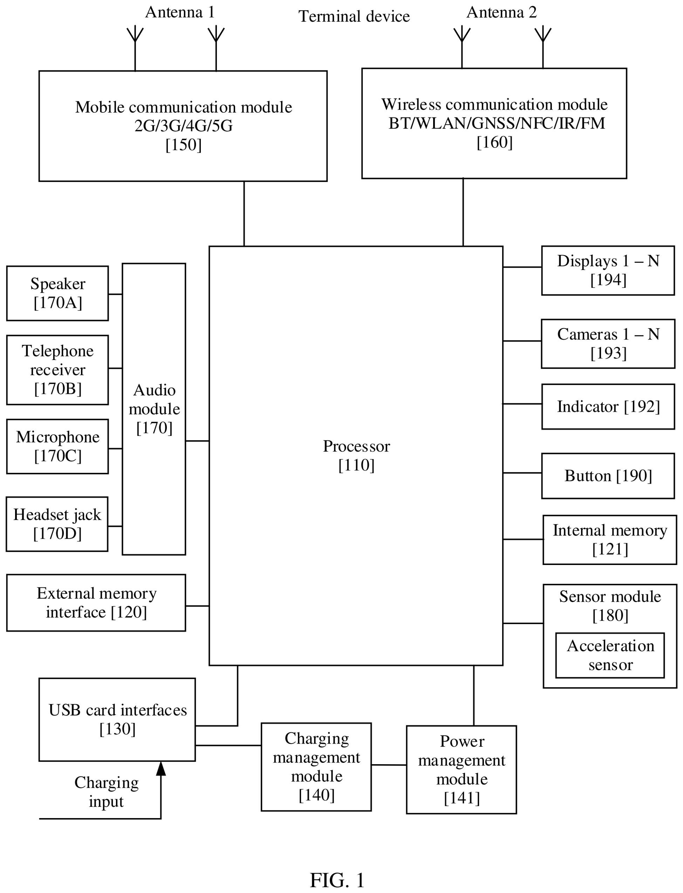

Therefore, to better understand embodiments of this application, the following describes a structure of the terminal device in embodiments of this application. For example, FIG. 1 is a schematic diagram of a structure of a terminal device according to an embodiment of this application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, an indicator 192, a camera 193, a display 194, and the like.

In this embodiment of this application, the sensor module 180 may include: an acceleration sensor. The acceleration sensor may recognize a posture of the terminal device, and implement detection on switching between a landscape screen and a portrait screen of the terminal device. The acceleration sensor may detect magnitudes of accelerations in various directions (usually on three axes) of the terminal device, and may detect a magnitude and a direction of a gravity when the terminal device is still.

In a possible implementation, the terminal device may include one or more of the following sensors: for example, a pressure sensor, a gyroscope sensor, a barometric pressure sensor, a magnetic sensor, a distance sensor, an optical proximity sensor, a fingerprint sensor, a temperature sensor, a touch sensor, an ambient light sensor, or a bone conduction sensor. This is not specifically limited in this embodiment of this application.

It may be understood that the structure shown in embodiments of this application does not constitute a specific limitation on the terminal device. In some other embodiments of this application, the terminal device may include more or fewer components than those shown in the figure, or some components may be combined, or some components may be split, or there may be a different component layout. The components in the figure may be implemented by hardware, software, or a combination of software and hardware.

The processor 110 may include one or more processing unit. Different processing units may be independent devices, or may be integrated into one or more processors. A storage may be further disposed in the processor 110 to store instructions and data.

The USB interface 130 is an interface compliant with a USB standard specification, and may be specifically a Mini USB interface, a Micro USB interface, a USB Type C interface, or the like. The USB interface 130 may be configured to connect to a charger to charge the terminal device, may be configured to perform data transmission between the terminal device and a peripheral device, or may be configured to connect to a headset to play audio by using the headset. The interface may alternatively be configured to connect to another electronic device, for example, an AR device.

The charging management module 140 is configured to receive charging input from the charger. The charger may be a wireless charger or a wired charger. The power management module 141 is configured to connect to the charging management module 140 and the processor 110.

A wireless communication function of the terminal device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device may be configured to cover a single or a plurality of communication bands. Different antennas may be further multiplexed to improve antenna utilization.

The mobile communication module 150 may provide a solution to wireless communication including 2G/3G/4G/5G that is applied to the terminal device. The mobile communication module 150 may include at least one filter, a switch, a power amplifier, a low noise amplifier (low noise amplifier, LNA), or the like. The mobile communication module 150 may receive an electromagnetic wave through the antenna 1, perform processing such as filtering or amplification on the received electromagnetic wave, and transmit the electromagnetic wave to the modem processor for demodulation.

The wireless communication module 160 may provide a solution for wireless communication applied to the terminal device, including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), and the like.

The terminal device implements a display function by using a GPU, the display 194, the application processor, and the like. The GPU is a microprocessor for image processing and connects the display 194 and the application processor. The GPU is configured to perform mathematical and geometric calculations and graphics rendering.

The display 194 is configured to display an image, a video, or the like. The display 194 includes a display panel. In some embodiments, the terminal device may include 1 or N displays 194, where N is a positive integer greater than 1.

The terminal device may implement a photographing function by using the ISP, the camera 193, the video codec, the GPU, the display 194, the application processor, and the like.

The camera 193 is configured to capture a still image or a video. In some embodiments, the terminal device may include 1 or N camera lenses 193, where N is a positive integer greater than 1.

The external memory interface 120 may be configured to connect to an external storage card such as a Micro SD card, to extend a storage capability of the terminal device. The external memory card communicates with the processor 110 through the external memory interface 120 to implement a data storage function. For example, files such as music and videos are stored in the external storage card.

The internal memory 121 may be configured to store computer-executable program code. The executable program code includes instructions. The internal memory 121 may include a program storage area and a data storage area.

The terminal device may implement an audio function through the audio module 170, the speaker 170A, the telephone receiver 170B, the microphone 170C, the headset jack 170D, the application processor, and the like. For example, music playback or audio recording is implemented.

The audio module 170 is configured to convert digital audio information into analog audio signal output, and is further configured to convert analog audio input into a digital audio signal. The speaker 170A, alternatively referred to as a "loudspeaker", is configured to convert an electrical audio signal to a sound signal. Music may be listened to or a hands-free call may be answered by using the speaker 170A in the terminal device. The telephone receiver 170B, also referred to as an "earpiece", is configured to convert an audio electrical signal into a sound signal. When a call is answered or voice information is listened to by using the terminal device, the telephone receiver 170B may be put close to a human ear to listen to a voice. The headset jack 170D is configured to be connected to a wired headset. The microphone 170C, also referred to as a "voice tube" or a "mike", is configured to convert a sound signal into an electrical signal. In embodiments of this application, the terminal device may be provided with a microphone 170C.

The pressure sensor is configured to sense a pressure signal, and may convert the pressure signal into an electrical signal. In some embodiments, the pressure sensor may be disposed on the display 194. The gyroscope sensor may be configured to determine a movement posture of the terminal device. The barometric pressure transducer is configured to measure an air pressure. The magnetic sensor includes a Hall effect sensor. The accelerometer may detect magnitudes of accelerations of the terminal device in all directions (generally on three axes). The distance sensor is configured to measure a distance. The optical proximity sensor may include, for example, a light emitting diode (LED) and an optical detector, for example, a photo diode. The ambient light sensor is configured to sense luminance of ambient light. The fingerprint sensor is configured to collect a fingerprint. The temperature sensor is configured to detect temperature. The touch sensor is also referred to as a "touch component". The bone conduction sensor may obtain a vibration signal.

The touch sensor may be disposed on the display 194, and the touch sensor and the display 194 form a touchscreen, which is, referred to as a "touch screen". In this embodiment of this application, a capacitive sensing node grid (which is briefly referred to as a capacitive sensor below) may be disposed on the touchscreen. When determining that a value of a capacitance in at least one grid that is received by the capacitive sensor exceeds a capacitance threshold, the terminal device may determine that a touch operation occurs. Further, the terminal device may determine a touch region corresponding to the touch operation based on a region occupied by the at least one grid that exceeds the capacitance threshold.

The button 190 includes a power button, a volume button, or the like. The button 190 may be a mechanical button or may be a touch button. The terminal device may receive a key input, and generate a key signal input related to user setting and function control of the terminal device. The indicator 192 may be an indicator light, and may be configured to indicate a charging status or a battery level change, or may be configured to indicate a message, a missed call, a notification, and the like.

A software system of the terminal device may use a hierarchical architecture, an event-driven architecture, a microcore architecture, a micro service architecture, or a cloud architecture, which are not described in detail herein again.

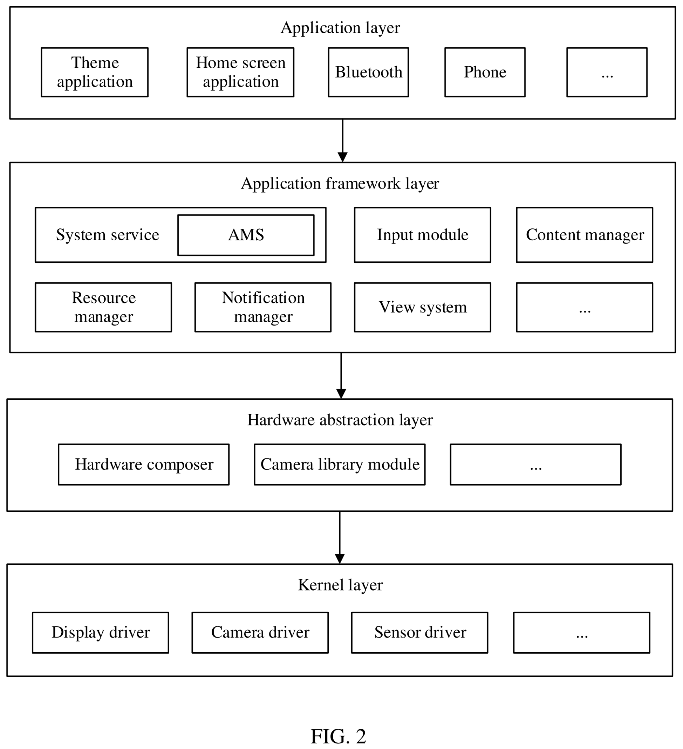

For example, FIG. 2 is a schematic diagram of a software structure of a terminal device according to an embodiment of this application. As shown in FIG. 2, a layered architecture divides software into several layers, and each layer has a clear role and task. The layers communicate with each other through a software interface. In some embodiments, an Android system is divided into a plurality of layers, that is, an application (application, APP) layer, an application framework (framework) layer, a hardware abstraction layer (hardware abstraction layer, HAL), and a kernel (kernel) layer from top to bottom. This is not limited in this embodiment of this application.

The application program layer may include a series of application program packages. The application layer may include one or more of the following: a body application, a home screen application, Bluetooth, or a telephone. This is not limited in this embodiment of this application.

The application program framework layer provides an application programming interface (application programming interface, API) and a programming framework for application programs at the application program layer. The application framework layer includes some predefined interfaces. The application framework layer may include one or more of the following: a system service (system service), an input (input) module, a window manager, a content provider, a resource manager, a view system, a notification manager, and the like. The system service may further include an activity manager service (activity manager service, AMS).

The system service is used to control, based on a received trigger event, the home screen application to perform a resource change, obtain a configuration of the home screen application, and determine, based on the configuration of the home screen application, whether to initiate the resource change performed by the home screen application.

The AMS is used to control starting of the home screen application based on the received trigger event. Alternatively, the AMS may further control starting of a theme application.

The input module is used to receive various types of touch events performed on the terminal device by a user. The touch event may include: a press event (or referred to as a down event), a slide event (or referred to as a move event), or an uplift event (or referred to as an up event), and the like.

The window manager is configured to manage a window application. For example, the window manager may be used to apply a foreground window, obtain a size of a display, determine whether there is a status bar, determine screen locking, screen touch, screen dragging, and screen capturing, and the like.

The content provider is configured to store and obtain data, and enable the data to be accessible to an application. The data may include a video, an image, audio, outgoing and incoming calls, a browsing history and bookmarks, contacts, and the like. The view system includes visual buttons such as a text display button, a picture display button, or the like. The view system may be configured to build an application. A display interface may include one or more views. For example, a display interface including a short message service message notification icon may include a view for displaying text and a view for displaying a picture. The resource manager provides various resources for an application, such as a localized string, an icon, a picture, a layout file, and a video file.

An objective of the hardware abstraction layer is to abstract hardware, so as to provide a unified interface for querying a hardware device for an upper-layer application, or provide a data storage service for an upper-layer application. The hardware abstraction layer may include a hardware composer (hardware composer, HWC) and the like.

The kernel layer is a layer between hardware and software. The kernel layer is used to drive the hardware to enable the hardware to work. The kernel layer may include one or more of the following: a display drive, a camera drive, a sensor drive, and the like.

The sensor drive is used to detect an event detected by a sensor and send the event to the system service.

The software layer in the software architecture, modules included in the layer, and actions of the modules are not specifically limited in this embodiment of this application.

The following describes the technical solutions of this application and how to resolve the foregoing technical problems according to the technical solutions of this application in detail by using specific embodiments. The following several specific embodiments may be implemented independently or combined with each other, and same or similar concepts or processes may not be repeatedly described in some embodiments.

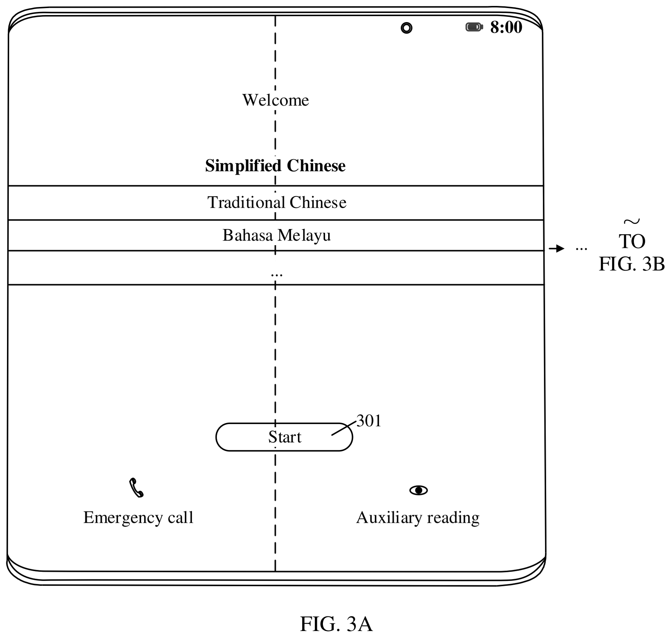

Generally, the terminal device may trigger a startup wizard process during first startup, enabling the user to set content in a startup wizard, such as a language, a map, an input method, lock screen passwords, a payment method, gesture navigation, on-screen three-button navigation, and the like. For a process in which the terminal device sets gesture navigation in the startup wizard process, refer to the embodiment corresponding to FIG. 3A to FIG. 3D.

Gesture navigation may be understood as implementing control over the terminal device via a gesture operation performed on a display. For example, in response to an operation of the user sliding upward from a bottom of the display, the terminal device may display a home screen; in response to an operation of the user sliding from a left side or a right side of the display, the terminal device may return to a previous level interface of a current interface; in response to an operation of the user sliding upward from the bottom of the display and pausing, the terminal device displays a multitasking interface; or in response to an operation of the user sliding from an edge of the bottom of the display in an arc, the terminal device may quickly switch an application. Gesture operations supported by the terminal device may not be limited to the above, and details are not described herein.

The on-screen three-button navigation may be understood as implementing control over the terminal device via three virtual buttons displayed at the bottom of the display. The three virtual buttons include a small square, a small circle, and a small triangle. For example, in response to an operation of the user tapping on the small square, the terminal device may return to the previous level interface of the current interface; in response to an operation of the user tapping on the small circle, the terminal device may display the home screen; and in response to an operation of the user tapping on the small triangle, the terminal device may display the multitasking interface.

It may be understood that, in comparison that the terminal device is controlled via the on-screen three-button navigation, an operating range of gesture navigation is larger, and drawing the virtual button on the content of the application by a system can be minimized.

For example, FIG. 3A to FIG. 3D are a schematic diagram of an interface for setting a startup wizard according to an embodiment of this application. In an embodiment corresponding to FIG. 3A to FIG. 3D, an example in which a terminal device is a foldable mobile phone (or referred to as a terminal device having an inward-foldable screen) is used for description. This example does not constitute a limitation on this embodiment of this application.

The terminal device may display an interface shown in FIG. 3A during first startup. The interface may be referred to as a first interface of a startup wizard, and is used to implement setting of a language. The interface displays: at least one button for setting a language, a button 301 for starting the terminal device, a button for triggering an emergency call, and a button for triggering auxiliary reading. In the interface, the terminal device may select simplified Chinese as a use language by default.

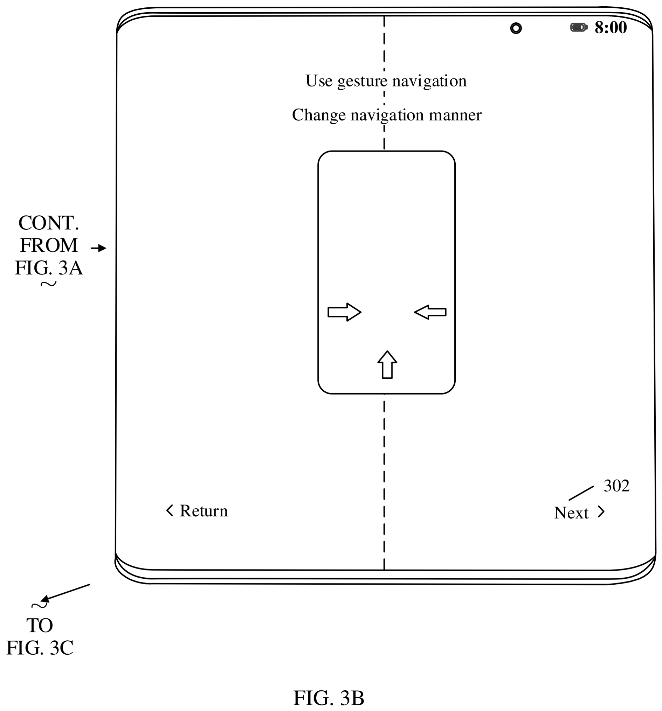

When the terminal device detects a trigger operation performed by the user on the button 301, the terminal device may display the interface shown in FIG. 3B after displaying an interface for setting a plurality of other startup wizards. The interface shown in FIG. 3B may be referred to as a gesture navigation setting interface, and allows for setting of a navigation manner. The interface may display a Back button, a Next button 302, a button for changing the navigation manner, and the like.

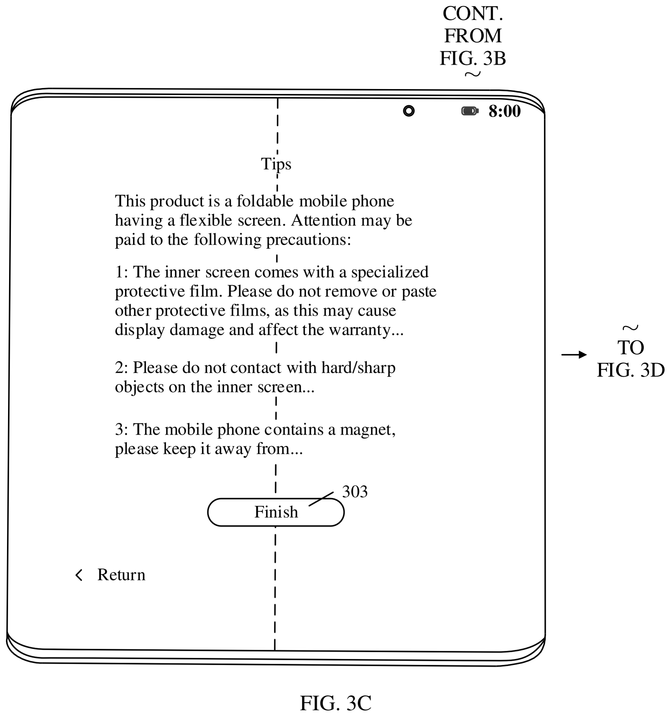

The terminal device may set gesture navigation as a navigation manner of the terminal device by default. For example, when the terminal device detects a trigger operation performed by the user on the Next button 302, the terminal device determines to use gesture navigation, and displays the interface shown in FIG. 3C. Alternatively, the user may further change the navigation manner into on-screen three-button navigation by triggering a button for changing the navigation manner.

In response to the trigger operation performed by the user on the Next button 302, the terminal device may invoke sendconfigchange(), to enable a home screen application to perform a resource change, and thus the home screen application performs a home screen starting process.

As shown in the interface shown in FIG. 3C, the interface may be referred to as a startup wizard completion interface, and precautions for using the terminal device may be viewed in the interface. The interface may display: a Finish button 303, text information corresponding to the precautions, and a Back button.

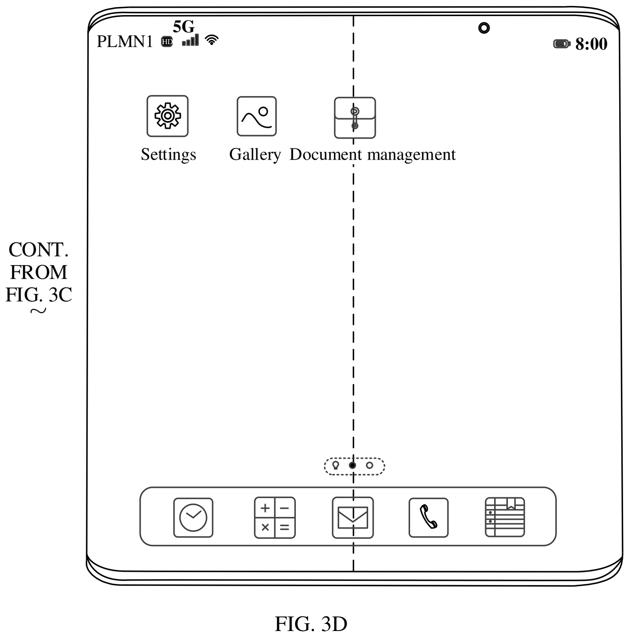

When the terminal device detects the trigger operation performed by the user on the Finish button 303, the terminal device may display an interface shown in FIG. 3D, and the interface may be a home screen interface. The home screen interface may be used to view various applications of the terminal device. For example, the interface may display: a settings application icon, a gallery application icon, a document management application icon, and a fixed bar disposed at a bottom of a display. The fixed bar may display: an alarm clock application icon, a computer application icon, a mailbox application icon, a telephone application icon, and a memo application icon.

In response to the trigger operation performed by the user on the Finish button 303, the terminal device may invoke startactivity(), to enable the home screen application to start a home screen.

It may be understood that the home screen may be started by triggering the Next button 302 and triggering the Finish button 303. Therefore, when the terminal device slowly initiates sendconfigchange() in response to the trigger operation performed by the user on the Next button 302, or the terminal device quickly initiates the starting of the home screen in response to the trigger operation performed by the user on the Finish button 303, the terminal device may detect, in a process in which the home screen is started in response to the trigger operation performed by the user on the Finish button 303, that the terminal device starts the home screen again in response to the Next button 302. In addition, in the process in which the home screen is started again, the terminal device writes dirty data to a home screen database. As a result, the home screen cannot be loaded normally, causing a display anomaly of the home screen.

In the above two processes in which the home screen is started, the terminal device writes application icon data to the home screen database. Because the two pieces of data of application icons are repeated, the home screen cannot be loaded normally. Therefore, a layout of an icon actually displayed on the home screen may be different from a layout of the icon preset by the terminal device, causing the display anomaly of the home screen. For example, if an icon of a specific application is preset at a first position in an upper left corner of a specific interface. Because of the display anomaly of the home screen, the icon of the application is displayed in a lower right corner of the interface.

The dirty data may be understood as application icon data that is written to the home screen database by the terminal device when the terminal device starts the home screen in response to the Next button 302. The application icon data may include, for example, data such as coordinates of the application icon, a width and height of the application icon, a name of the application icon, and the like.

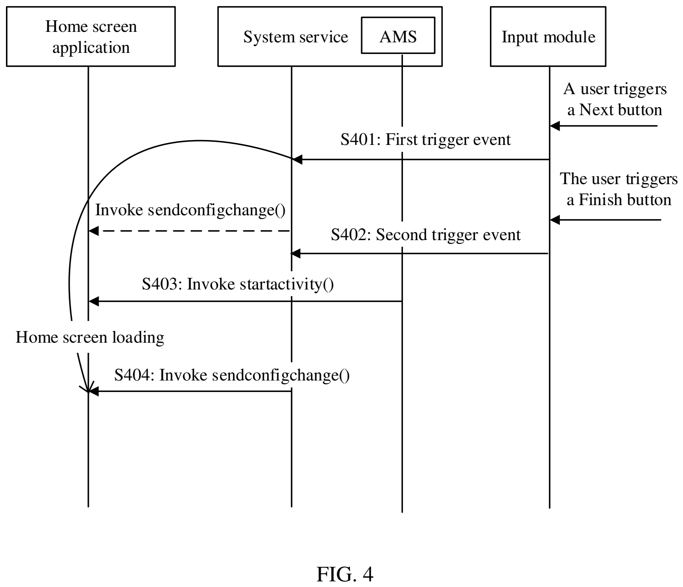

Based on the embodiment corresponding to FIG. 3A to FIG. 3D, the two processes in which the terminal device starts the home screen during the startup wizard may be described based on the embodiment corresponding to FIG. 4.

For example, FIG. 4 is a schematic flowchart of a method for starting a home screen according to an embodiment of this application. In the embodiment corresponding to FIG. 4, the terminal device may include: a home screen application, a system service, and an input module. The system service may include an AMS.

As shown in FIG. 4, the method for starting a home screen includes the following steps.

S401: In response to a trigger operation performed by the user on a Next button, an input module sends a first trigger event to a system service.

The Next button may be the Next button 302 in the interface shown in FIG. 3B.

The first trigger event may include: a down event for the Next button 302, and an up event for the Next button 302.

Typically, when the system service detects the first trigger event, the system service may invoke sendconfigchange(), to send information about a configuration (or referred to as a resource) change to a background application, and a home screen application receives sendconfigchange(), and triggers starting of the home screen.

sendconfigchange() is a function for notifying a configuration change, and an application may perform a resource change based on received sendconfigchange().

sendconfigchange() may include a configchange object, and configchange may be understood as the configuration change. The configchange object may include the content of the configuration change. For example, the configchange object may include one or more of the following, for example, screen size information, display direction information, a type of the configchange object, and the like.

The type of the configchange object may be: a resource change type or a non-resource change type. The resource change may include: a wallpaper change and the like. The non-resource change may include one or more of the following: a dark color mode change/a light color mode change, a device folding change/a device unfolding change, a device rotation change (or referred to as a device size change), and the like.

In a sendconfigchange() invocation actually initiated by the terminal device, the resource change type or the non-resource change type may be identified with a corresponding type and carried in sendconfigchange().

Because an instruction instructing the terminal device to invoke sendconfigchange() to perform the resource change is sent to the home screen application relatively late, or the user relatively and quickly performs the operation of triggering the Finish button 303, the terminal device invokes sendconfigchange() in response to the first trigger event after S403 is performed. This may be understood as that the terminal device does not initiate a step of invoking sendconfigchange() in S404 after S401, but performs the step shown in S404 after S403 is performed.

S402: In response to a trigger operation performed by the user on a Finish button, the input module sends a second trigger event to the system service.

The Finish button may be the Finish button 303 in the interface shown in FIG. 3C.

The second trigger event may include: a down event for the Finish button 303, and an up event for the Finish button 303.

The home screen application is in a background before S403; and in S403, the home screen application is in a foreground after the terminal device starts the home screen.

The foreground and the background are usually used to describe a state of an application at runtime.

Specifically, the application is in the foreground when the interface of the application is being displayed. In this case, the application is in an onresume state.

The background means that the application is still running but the interface of the application is not displayed on a screen. In this case, the application is not in the onresume state. An application running in the background may perform some lightweight operations, such as receiving a message notification, monitoring a network change, and the like. However, resource usage and a priority of the application are usually low.

S403: The AMS in the system service invokes startactivity(), and the home screen application starts the home screen.

startactivity() is a function for starting an activity.

After S403, the home screen application performs a home screen loading process. In the home screen loading process, the home screen is switched from the background to the foreground, and the system service performs steps shown in S404 in response to the first trigger event.

S404: The system service invokes sendconfigchange(), and the home screen application performs the resource change.

In sendconfigchange(), the type of the configchange object may be the resource change type.

It may be understood that, when the type of the configchange object is the resource change type, the home screen is started. In the process in which the home screen is started, the system service may write dirty data to a home screen database. As a result, the home screen application cannot be loaded normally, causing a display anomaly of the home screen.

Based on the embodiment corresponding to FIG. 4, the terminal device can set an avoid relaunch configuration item avoid_rro_relaunch, to ensure that the system service does not initiate invocation of sendconfigchange().

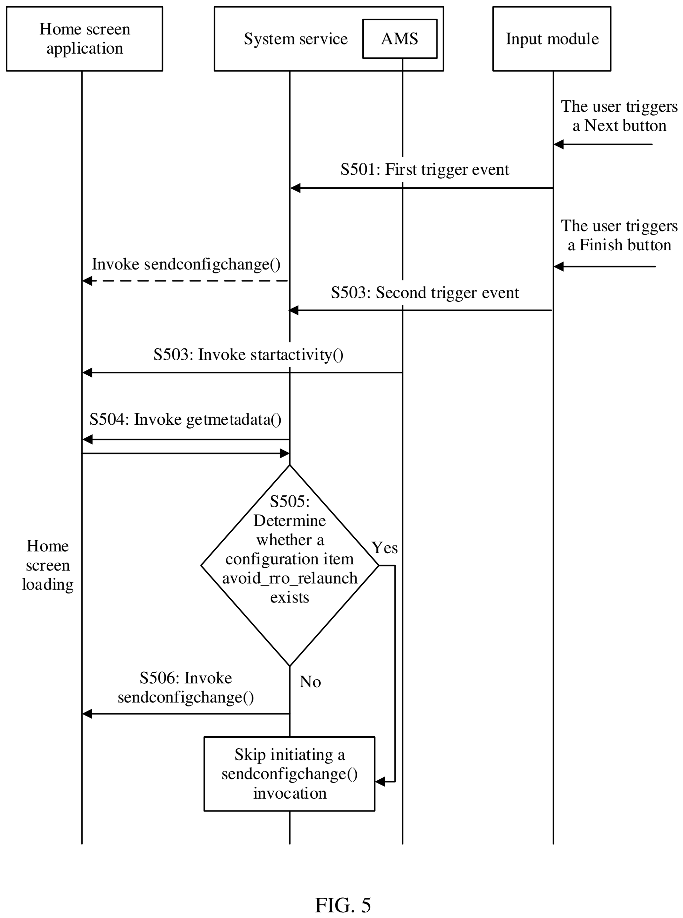

For example, FIG. 5 is a schematic flowchart of another method for starting a home screen according to an embodiment of this application.

As shown in FIG. 5, the method for starting a home screen includes the following steps.

S501: In response to a trigger operation performed by a user on a Next button, an input module sends a first trigger event to a system service.

S502: In response to a trigger operation performed by the user on a Finish button, the input module sends a second trigger event to the system service.

S503: An AMS in the system service invokes startactivity(), and a home screen application starts a home screen.

For steps shown in S503 to S501, refer to the description of the steps shown in S401 to S403. Details are not described herein again.

After S503, the home screen application performs a home screen loading process. In the home screen loading process, the home screen may be switched from a background to a foreground.

S504: The system service invokes getmetadata() to obtain a configuration of the home screen application.

getmetadata() is a function for obtaining metadata. The metadata is information for describing data. For example, the system service may obtain metadata in the home screen application through getmetadata().

The configuration of the home screen application may include a configuration item avoid_rro_relaunch.

The configuration item avoid_rro_relaunch may be separately configured for each application. When a target application is configured with avoid_rro_relaunch, the target application does not receive a sendconfigchange() invocation initiated by the system service. For example, when the target application is configured with avoid_rro_relaunch, the system service may not initiate, in response to the steps shown in S501, the sendconfigchange() invocation to the target application based on avoid_rro_relaunch.

In a possible implementation, when the target application is not configured with avoid_rro_relaunch, the system service may initiate, in response to the steps shown in S501, the endconfigchange() invocation to the target application. In this case, the target application receives sendconfigchange(), and then the target application triggers a starting process.

S505: The system service determines whether the configuration item avoid_rro_relaunch exists.

When the system service determines that the configuration item avoid_rro_relaunch exists, the system service does not initiate the sendconfigchange() invocation. Alternatively, when the system service determines that the configuration item avoid_rro_relaunch does not exist, the system service performs the steps shown in S506.

When the system service determines that avoid_rro_relaunch is true, it is determined that the configuration item exists. Alternatively, when the system service determines that avoid_rro_relaunch is not true, it is determined that the configuration item does not exist.

S506: The system service invokes sendconfigchange(), and the home screen application performs a resource change.

For the steps shown in S506, refer to the description of the steps shown in S404. Details are not described herein again.

Based on this, the system service may detect the configuration item avoid_rro_relaunch in the home screen application, to avoid initiating the sendconfigchange() invocation to the home screen application and avoid starting the home screen. Therefore, the home screen application cannot start the home screen again in the home screen loading process, thereby avoiding writing dirty data to a home screen database while the home screen is started again.

In a possible implementation, the system service may initiate the sendconfigchange() invocation to the home screen application after S505 is performed, and does not initiate a starting instruction to the home screen application. Therefore, the home screen application may receive the sendconfigchange() invocation but cannot receive an instruction for starting the home screen, to avoid starting the home screen again in the home screen loading process.

In the embodiment corresponding to FIG. 5, on the basis that the terminal device avoids, by setting avoid_rro_relaunch, initiating the sendconfigchange() invocation to the home screen, when the terminal device is in a combined scenario, for example, a scenario in which the terminal device displays the home screen in a landscape mode, switches to a portrait mode and sets a wallpaper, and returns to the foreground, the terminal device may have a layout anomaly of the home screen.

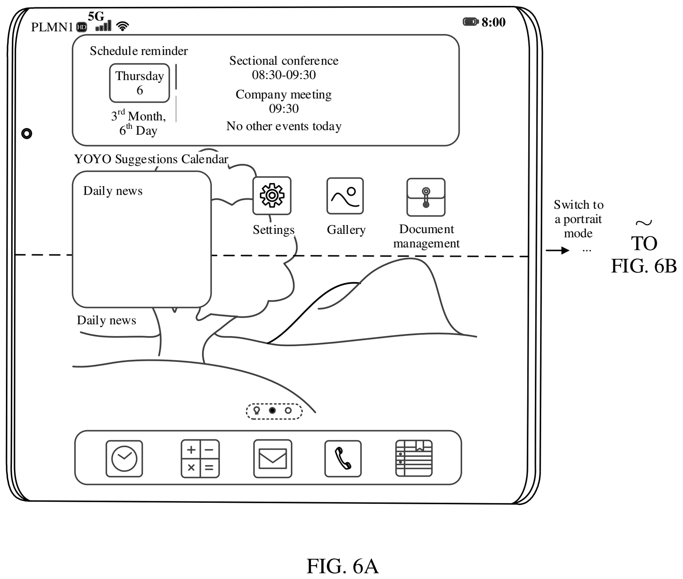

For example, FIG. 6A to FIG. 6D are a schematic diagram of an interface of a layout anomaly of a home screen according to an embodiment of this application.

A terminal device may display an interface shown in FIG. 6A in a landscape mode. The interface may be a home screen interface of the terminal device, and is used to view various applications of the terminal device. The home screen may display: a schedule card, a daily news card, a settings application icon, a gallery application icon, a document management application icon, and a fixed bar disposed at a bottom of a display. The fixed bar may display: an alarm clock application icon, a computer application icon, a mailbox application icon, a telephone application icon, and a memo application icon. The interface may further display a wallpaper. The wallpaper may display a tree and a mountain.

When detecting a trigger operation performed by the user on the settings application icon, the terminal device may enter the settings application and display a home page of the settings application. When the terminal device enters the settings application, the terminal device may adaptively switch, upon detecting an operation of the user switching from the landscape mode to a portrait mode, content displayed on the terminal device.

In response to the operation of the user switching from the landscape mode to the portrait mode, the terminal device initiates the sendconfigchange() invocation to a background application, to notify the home screen application in the background to perform screen rotation.

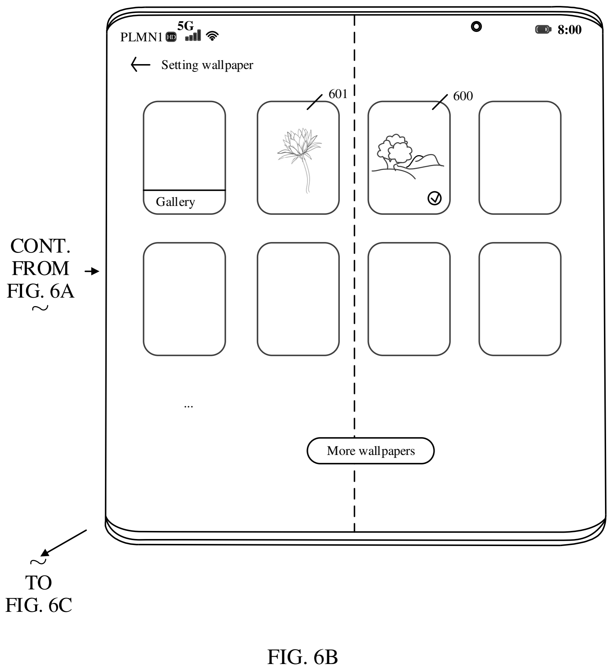

The terminal device may display an interface shown in FIG. 6B in the portrait mode when detecting that the user opens an interface for selecting a wallpaper in the Settings application by following a path Home screen & style -> Wallpapers. As shown in the interface shown in FIG. 6B, the interface may be a wallpaper selection interface, and is used to view an image provided by the terminal device. The interface may display: a button for opening a gallery, a thumbnail corresponding to at least one image, for example, a thumbnail 600 and a thumbnail 601, and a button for viewing more wallpapers. The thumbnail 600 may display a selected mark, and the thumbnail 601 does not display the selected mark. As shown in FIG. 6A to FIG. 6D, the selected mark includes a checkmark "✔".

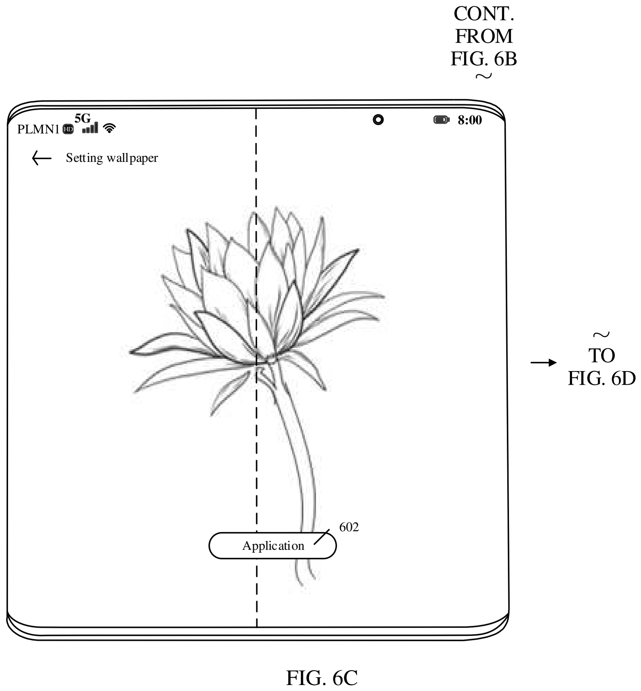

When the terminal device detects a trigger operation performed by the user on the thumbnail 601, the terminal device displays an interface shown in FIG. 6C in the portrait mode. The interface is a wallpaper setting interface, and is used to set a selected wallpaper. The interface may display an image corresponding to the thumbnail 601, and a button 602 to apply as wallpaper.

When the terminal device detects a trigger operation performed by the user on the button 602, the terminal device may set the image corresponding to the thumbnail 601 as a home screen wallpaper of the terminal device. In response to the trigger operation performed by the user on the button 602, the terminal device may display the interface for selecting a wallpaper. In the interface, the thumbnail 600 does not include the selected mark, and the thumbnail 601 includes the selected mark. This may be understood that, in this case, the terminal device has set the image corresponding to the thumbnail 601 as the home screen wallpaper, which is not shown in FIG. 6A to FIG. 6D.

In response to the operation of the user setting the home screen wallpaper, the terminal device initiates the sendconfigchange() invocation to the background application, and notifies the home screen application in the background to perform a resource change.

It is understood that, when the terminal device sets the image corresponding to the thumbnail 600 as the home screen wallpaper, the terminal device further initiates the sendconfigchange() invocation to the background application. In this scenario, the home screen wallpaper is not switched, but a wallpaper setting operation is triggered once. This is not limited in this embodiment of this application.

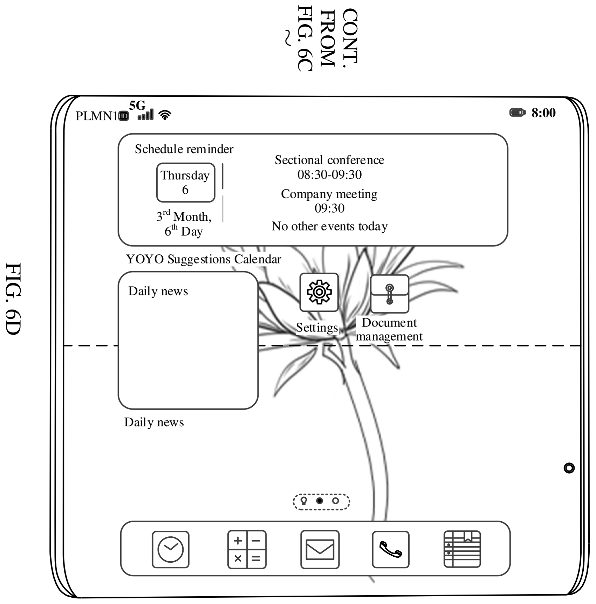

After the wallpaper is set, when the terminal device detects an operation of the user returning to the home screen, the terminal device may exit a current interface and return to the home screen. For example, the terminal device displays an interface shown in FIG. 6D in the portrait mode. The operation of the user returning to the home screen may be an operation of the user sliding upward from the bottom of the display. In the interface shown in FIG. 6D, the terminal device may display, in the portrait mode, a home screen layout displayed when the terminal device is in the landscape mode, causing the layout anomaly of the home screen.

In response to the operation of the user swiping upward from the bottom of the interface shown in FIG. 6B, the terminal device may modify, when determining that the configuration item avoid_rro_relaunch exists, the type of the configchange object from the resource change type to the non-resource change type, and the sendconfigchange() invocation of the non-resource change type may be used for screen rotation. Further, due to the two sendconfigchange() invocations of the non-resource change type, the landscape state and the portrait state of the home screen are not changed. Therefore, the terminal device does not trigger sendconfigchange() of the resource change type. As a result, the terminal device displays, in the portrait mode, the home screen layout displayed in the landscape mode.

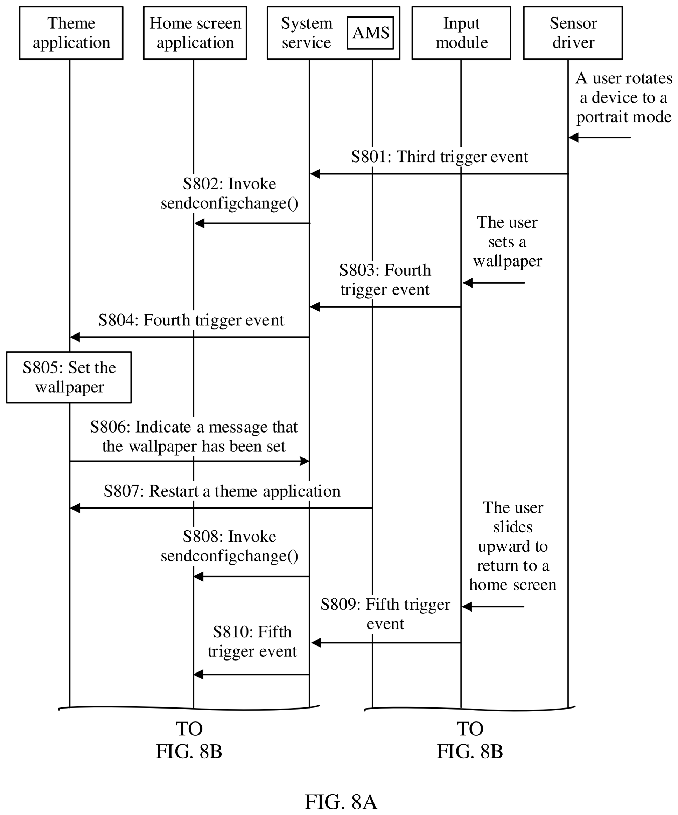

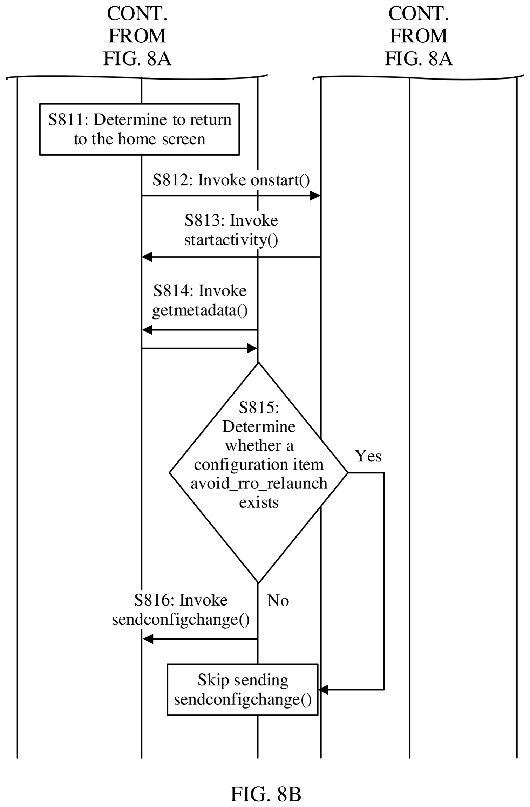

It may be understood that a combined scenario affecting the home screen layout may not be limited to the description in FIG. 6A to FIG. 6D. For example, when the terminal device is in a combined scenario 1, for example, a scenario in which the terminal device displays the home screen in the portrait mode, enables the setting function, switches to the landscape mode for setting the wallpaper, and returns to a foreground, or when the terminal device is in a combined scenario 2, for example, a scenario in which the terminal device unfolds the device to display the home screen, enables the setting function, collapses the device to set the wallpaper, and returns to a foreground, or when the terminal device is in a combined scenario 3, for example, a scenario in which the terminal device folds the device to display the home screen, enables the setting function, unfolds the device to set the wallpaper, and returns to a foreground, the terminal device may have the layout anomaly of the home screen shown in FIG. 6A to FIG. 6D. For the specific solution, refer to the similar description in FIG. 8A and FIG. 8B, and details are not described herein again.

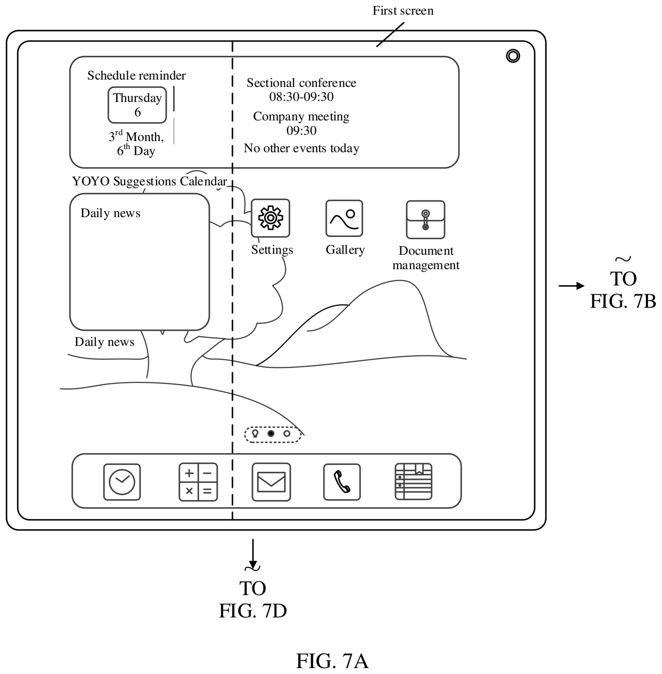

For example, when the terminal device is a first device having an outward-foldable screen, FIG. 7A to FIG. 7D specifically describe, by using the combined scenario 2 as an example, that a device unfolding change/a device folding change affects the home screen layout. FIG. 7A to FIG. 7D are a schematic diagram of another interface of a layout anomaly of the home screen according to an embodiment of this application.

When the first device is in an unfolded state, the first device may display, on a first screen, an interface shown in FIG. 7A. The interface may be a home screen interface of the first device, and content displayed in the interface may be similar to content displayed in the interface shown in FIG. 6A, and details are not described herein again.

When detecting the trigger operation performed by the user on the settings application icon, the first device may enter the settings application, and display a home page of the settings application, the wallpaper selection interface in the settings application, or other interfaces. When the first device enters the settings application, the first device may display, upon detecting an operation of the user folding the first device, content in the settings application on a second screen of the first device, and a third screen of the first device is off.

In response to the operation of the user folding the first device, the first device initiates the sendconfigchange() invocation to the background application, to notify the home screen application in the background to fold the screen.

The second screen may also be referred to as a primary screen, and the third screen may also be referred to as a rear screen or an auxiliary screen. The first screen, the second screen, and the third screen are all different display areas in the display. An area of the second screen may be larger than an area of the third screen, and an area of the first screen may be larger than the area of the second screen.

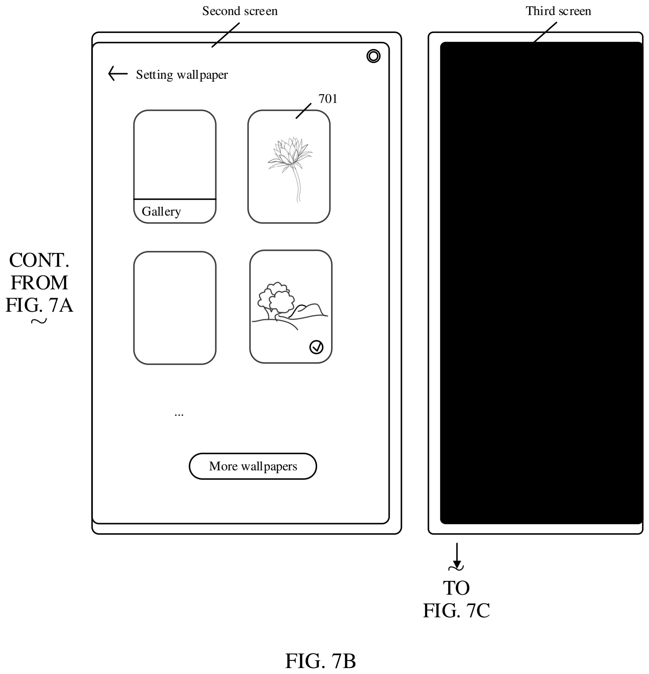

It may be understood that, when the user folds the first device, the third screen may be turned off, and positioned back to back with the second screen. In this embodiment of this application, in order to distinguish the second screen and the third screen, a display state of the third screen is used as an example for description. As shown in an interface shown in FIG. 7B, the third screen is off. Content displayed on the second screen in the interface shown in FIG. 7B is similar to the content displayed in the interface shown in FIG. 6B, and details are not described herein again.

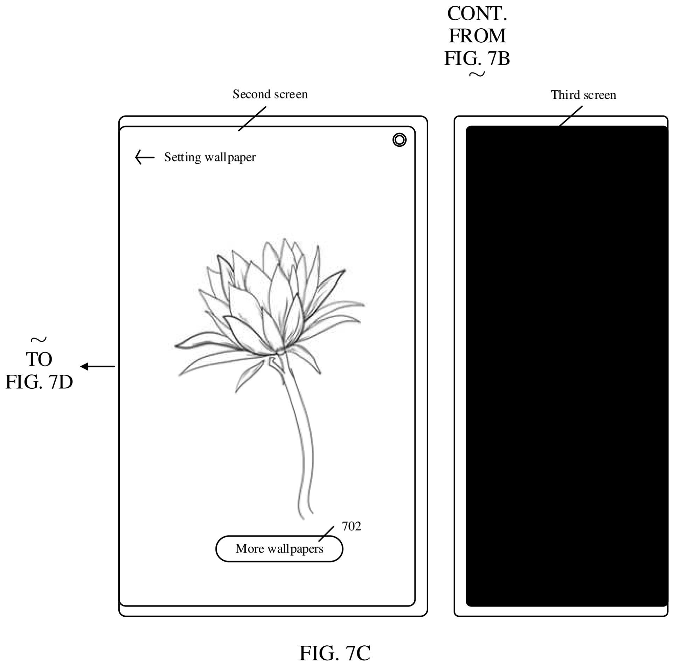

When the first device detects a trigger operation performed by the user on the thumbnail 701, the first device displays an interface of the second screen shown in FIG. 7C. The interface is a wallpaper setting interface, and is used to set a selected wallpaper. The interface may display: an image corresponding to the thumbnail 701, and a button 702 for applying a wallpaper.

When the first device detects a trigger operation performed by the user on the button 702, the first device may set the image corresponding to the thumbnail 701 as a home screen wallpaper of the first device.

In response to the operation of the user setting the home screen wallpaper, the first device initiates the sendconfigchange() invocation to the background application, and notifies the home screen application in the background to perform a resource change.

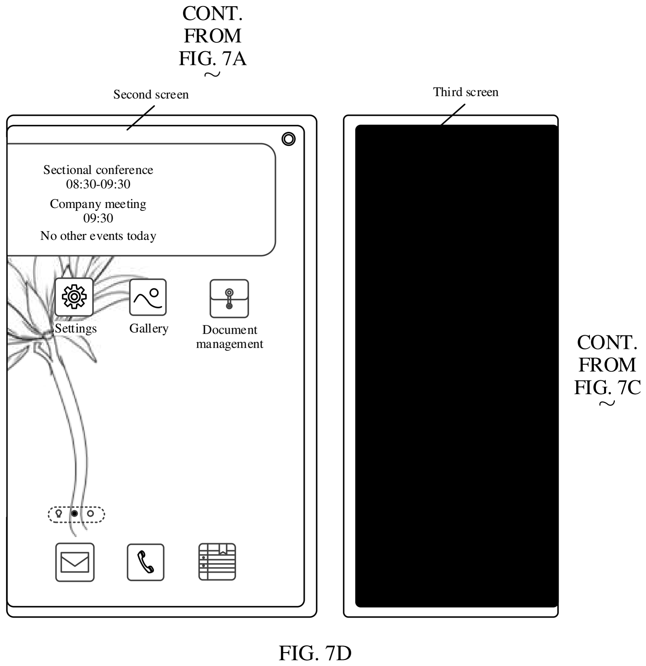

After the wallpaper is set, when the first device detects the operation of the user returning to the home screen, the first device may exit a current interface and return to the home screen. For example, the first device displays an interface of the second screen shown in FIG. 7D. In the interface displayed on the second screen as shown in FIG. 7D, the second screen of the first device displays a home screen layout displayed when the first device is in the unfolded state, causing the layout anomaly of the home screen.

In FIG. 7B to FIG. 7D, because the first device is in the folded state, the third screen is off.

In response to an operation of the user sliding upward from a bottom of the interface shown in FIG. 7B, when determining that the configuration item avoid_rro_relaunch exists, the first device may not trigger sendconfigchange() of the resource change type to cause the first device to display, in the folded state, the home screen layout for the device in the unfolded state.

It may be understood that, when the first device is in the combined scenario 3, the first device also has the layout anomaly of the home screen that is similar to that in the scenario described in the embodiment corresponding to FIG. 7A to FIG. 7D. Details are not described herein again.

Based on the embodiment corresponding to FIG. 6A to FIG. 6D, the terminal device may describe, based on the embodiment corresponding to FIG. 8A and FIG. 8B, execution logic of the device in the combined scenario.

For example, FIG. 8A and FIG. 8B are a schematic flowchart of a still another method for starting a home screen according to an embodiment of this application. In an embodiment corresponding to FIG. 8A and FIG. 8B, a terminal device may include: a home screen application, a system service, an input module, and a sensor driver. The system service may include an AMS. An event received by the sensor drive may be an event obtained by a sensor used to recognize switching between a landscape mode and a portrait mode of a device. The sensor used to recognize switching between the landscape mode and the portrait mode of the device may be an acceleration sensor.

S801: In response to an operation of a user rotating the device to the portrait mode, the sensor driver may send a third trigger event to the system service.

The operation of the user rotating the device to the portrait mode may be an operation of the user switching between the landscape mode and the portrait mode in a settings application.

The third trigger event may be understood as a rotation event for the device. The third trigger event may include information that the terminal device is rotated to the portrait mode.

S802: The system service initiates a sendconfigchange() invocation to a background application.

A type of configchange object in sendconfigchange() described in S802 is a device rotation change in a non-resource invocation type.

The background application may include the home screen application. sendconfigchange() may be sent to the home screen application in the background by the system service. When receiving sendconfigchange(), the home screen application may determine, based on information carried in sendconfigchange(), to perform screen rotation.

S803: In response to an operation of the user setting a wallpaper, the input module sends a fourth trigger event to the system service.

The operation of the user setting the wallpaper may be the trigger operation performed by the user on the button 602 in the interface shown in FIG. 6C.

The fourth trigger event may include: a down event for the button 602, and an up event for the button 602.

S804: The system service sends the fourth trigger event to a theme application.

S805: In response to the fourth trigger event, the theme application sets the wallpaper.

S806: The theme application sends, to the system service, a message used to indicate that the setting of the wallpaper is completed.

S807: The AMS in the system service starts the theme application.

For example, when the system service determines that the setting of the wallpaper is completed, the AMS may close the theme application and start the theme application by invoking startactivity().

S808: The system service initiates the sendconfigchange() invocation to the background application, and the home screen application performs a resource change.

The type of the configchange object in sendconfigchange() described in S808 is a resource invocation type.

The background application may include the home screen application. sendconfigchange() may be sent to the home screen application in the background by the system service. When receiving sendconfigchange(), the home screen application may determine, based on the configuration change information carried in sendconfigchange(), to perform the resource change. For example, the home screen application sets the wallpaper based on the configuration change information.

S809: In response to the operation of the user sliding upward to return to the home screen, the input module sends a fifth trigger event to the system service.

The operation of the user sliding upward to return to the home screen may be the operation of the user sliding upward from the bottom of the interface shown in FIG. 6B.

The fifth trigger event may include: a down event for the interface shown in FIG. 6B, an up event for the interface shown in FIG. 6B, and a slide event (move event) for the interface shown in FIG. 6B.

S810: The system service sends a fifth trigger event to the home screen application.

S811: The home screen application receives the fifth trigger event, and determines whether a condition for sliding upward to return to the home screen is satisfied.

For example, the home screen application may compute, based on a parameter in the fifth trigger event, data such as a distance by which the user slides upward and a speed at which the user releases a finger. Then, when determining that the distance at which the user slides upward is greater than a distance threshold and the speed at which the user releases the finger is greater than a speed threshold, the home screen application determines that the home screen application satisfies the condition for sliding upward to return to the home screen, and performs a step shown in S812.

S812: The home screen application invokes, through onstart(), the AMS to start a home screen interface.

Onstart() is a function that is used to load a visible resource when an activity is switched from invisible to visible. For example, onstart() may initialize the interface of the home screen.

S813: The AMS in the system service invokes startactivity(), and the home screen application starts the home screen.

S814: The system service invokes getmetadata() to obtain a configuration of the home screen application.

The configuration of the home screen application may include: a configuration item avoid_rro_relaunch. For an action of avoid_rro_relaunch, refer to the description of S504, and details are not described herein again.

S815: The system service determines whether the configuration item avoid_rro_relaunch exists.

When the system service determines that the configuration item avoid_rro_relaunch exists, the system service does not initiate the sendconfigchange() invocation. Alternatively, when the system service determines that the configuration item avoid_rro_relaunch does not exist, the system service performs steps shown in S816.

S816: The system service initiates the sendconfigchange() invocation, and the home screen application performs the resource change.

It may be understood that, when the system service determines that the configuration item does not exist, the system service may modify the type of the configchange object in S808 into the resource type in a previous method invocation, that is, the non-resource change type in S802. In this case, the system service may determine that two sendconfigchange() invocations of the non-resource change type are received, and the two sendconfigchange() invocations of the non-resource change type are used to implement screen rotation. Therefore, the two screen rotations are offset, which is equivalent to that the home screen layout is not changed, such that the system service may determine not to initiate the sendconfigchange() invocation of the resource change type to the home screen application. In this scenario, the terminal device in the portrait mode may view the home screen layout in the landscape mode shown in FIG. 6D.

In a possible implementation, in addition to the device rotation change described in the embodiment corresponding to FIG. 8A and FIG. 8B, when the terminal device is the first device having the outward-foldable screen, the device unfolding change/the device folding change may also affect the home screen layout of the terminal device. A process of the layout anomaly of the home screen is similar to that in FIG. 7A to FIG. 7D, and details are not described herein again.

Based on the embodiment corresponding to FIG. 8A and FIG. 8B, the terminal device may mark the type of the configchange object by setting a resource change flag bit misresourcechange. The type may include a resource change type or a non-resource change type, and when it is determined that misresourcechange is true (or understood that the type of the configchange object is the resource change type), a configuratinchanged() invocation is actively triggered.

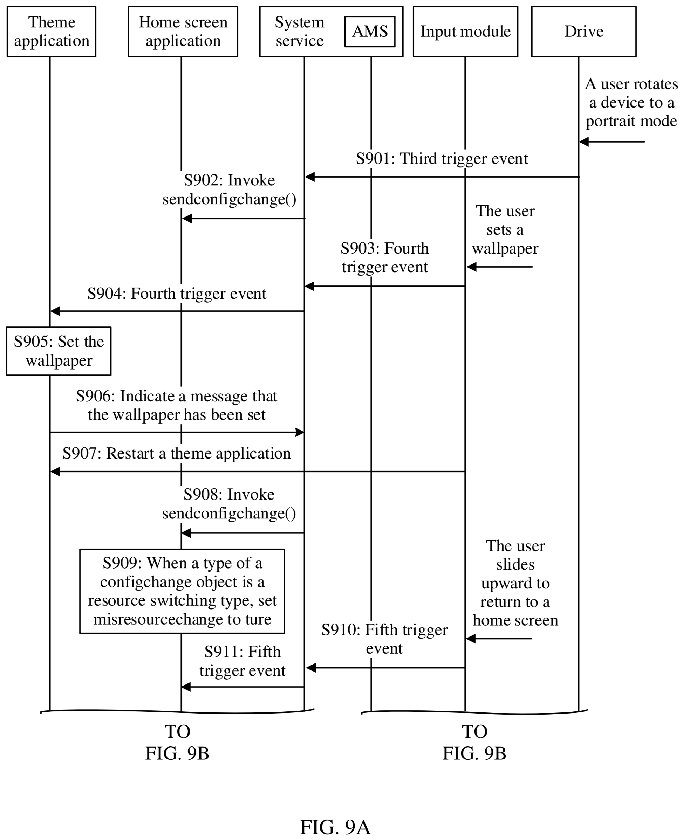

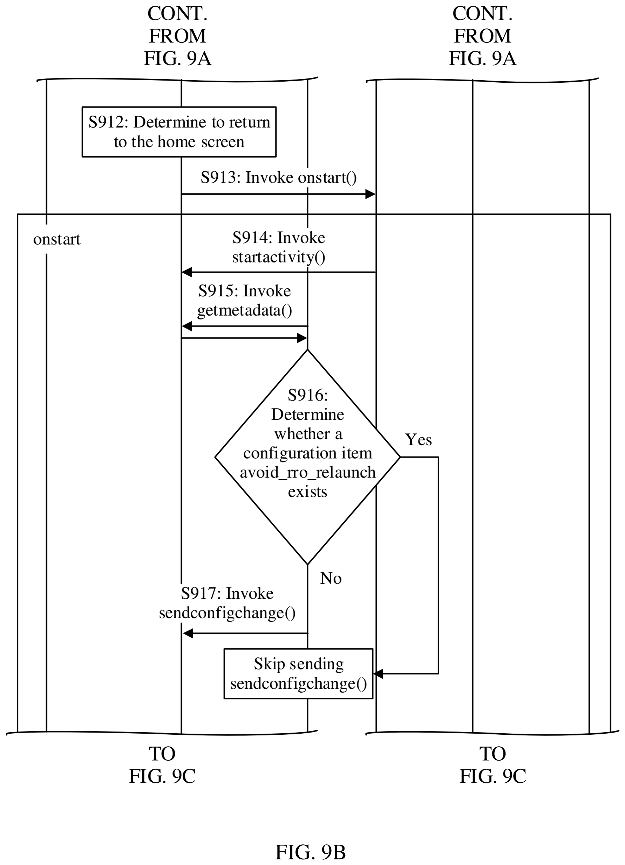

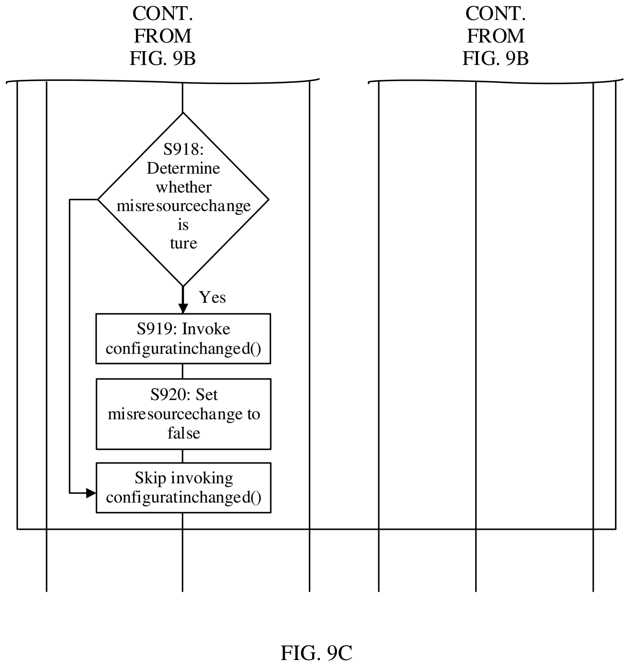

For example, FIG. 9A to FIG. 9C are a schematic flowchart of yet another method for starting a home screen according to an embodiment of this application.

S901: In response to an operation of a user rotating a device to a portrait mode, a sensor drive may send a third trigger event to a system service.

S902: The system service initiates a sendconfigchange() invocation to a background application.

S903: In response to an operation of the user setting a wallpaper, an input module sends a fourth trigger event to the system service.

S904: The system service sends the fourth trigger event to a theme application.

S905: In response to the fourth trigger event, the theme application sets the wallpaper.

S906: The theme application sends, to the system service, a message used to indicate that the setting of the wallpaper is completed.

S907: An AMS in the system service starts the theme application.

S908: The system service initiates the sendconfigchange() invocation to the background application, and a home screen application performs a resource change.

For the steps shown in S901-S908, refer to the steps shown in S801 to S808. Details are not described herein again.

sendconfigchange() may carry a type identifier of a configchange object, and a type identifier corresponding to a resource change type may be 0x80000000. It may be understood that when sendconfigchange() carries 0x80000000, the home screen application may determine that a type of the configchange object is the resource change type.

S909: When the type of the configchange object is the resource change type, the home screen application sets misresourcechange to ture.

misresourcechange may be understood as a resource change flag bit, and a different value of misresourcechange may correspond to a different resource change type when configchange() is initiated. For example, misresourcechange being true may be understood that a type of a configchange object in the sendconfigchange() invocation initiated by the system service is the resource change type; and misresourcechange being false may be understood that the type of the configchange object in the sendconfigchange() invocation initiated by the system service is a non-resource change type.

**In** a possible implementation, when the type of the configchange object is not the resource change type, the home screen application may set misresourcechange to false or may not set the type.

S910: In response to an operation of the user sliding upward to return to a home screen, the input module sends a fifth trigger event to the system service.

S911: The system service sends a fifth trigger event to the home screen application.

S912: In response to the fifth trigger event, the home screen application determines to return to the home screen.

S913: The home screen application invokes onstart(), and the AMS starts an interface of the home screen.

The steps shown in S914 to S921 may be understood as steps performed in an onstart() process.

S914: The AMS in the system service invokes startactivity(), and the home screen application starts the home screen.

S915: The system service invokes getmetadata() to obtain a configuration of the home screen application.

The configuration of the home screen application may include a configuration item avoid_rro_relaunch.

S916: The system service determines whether the configuration item avoid_rro_relaunch exists.

When the system service determines that the configuration item avoid_rro_relaunch exists, the system service performs steps shown in S917. Alternatively, when the system service determines that the configuration item avoid_rro_relaunch does not exist, the system service does not initiate the sendconfigchange() invocation.

S917: The system service initiates the sendconfigchange() invocation, and the home screen application performs the resource change.

For the steps shown in S910 to S917, refer to the steps shown in S809 to S816. Details are not described herein again.

For example, the terminal device may sequentially perform steps shown in S918 to S920 after determining logic in S916 to S917 is completed.

S918: The home screen application determines whether misresourcechange is true.

When the home screen application determines that misresourcechange is true, the home screen application performs steps shown in S919. Alternatively, when the home screen application determines that misresourcechange is not true, the home screen application does not initiate a configuratinchanged() invocation.

S919: The home screen application invokes configuratinchanged() to obtain a home screen resource.

For example, the home screen application may obtain the home screen resource by actively invoking configuratinchanged(). For example, when determining, through configuratinchanged(), that the terminal device is in a portrait state, the home screen application may adjust a layout structure of the home screen based on a portrait state, to enable the home screen application to display normally in the portrait state.

S920: The home screen application sets misresourcechange to false.

It may be understood that the home screen application may determine a value of misresourcechange, and then set misresourcechange to false, to avoid affecting the determining in S918.

Based on this, the terminal device may mark sendconfigchange() of the resource change type by setting a flag bit of misresourcechange, and when misresourcechange is true, actively trigger acquisition of the home screen resource, to determine the landscape state and the portrait state of the terminal device. This can avoid a layout anomaly of the home screen generated after the terminal device modifies sendconfigchange() of the resource change type into sendconfigchange() of the non-resource change type, and the two sendconfigchange() invocations of the non-resource change type are offset, enabling the terminal device to determine that the home screen is not changed, thereby not triggering the sendconfigchange() invocation of the non-resource change type.

It may be understood that when the terminal device is a first device having an outward-foldable screen, the first device may further reduce the occurrence of the combined scenario shown in FIG. 7A to FIG. 7D by marking the flag bit of misresourcechange. A specific process is similar to the description in FIG. 9A to FIG. 9C, and details are not described herein again.

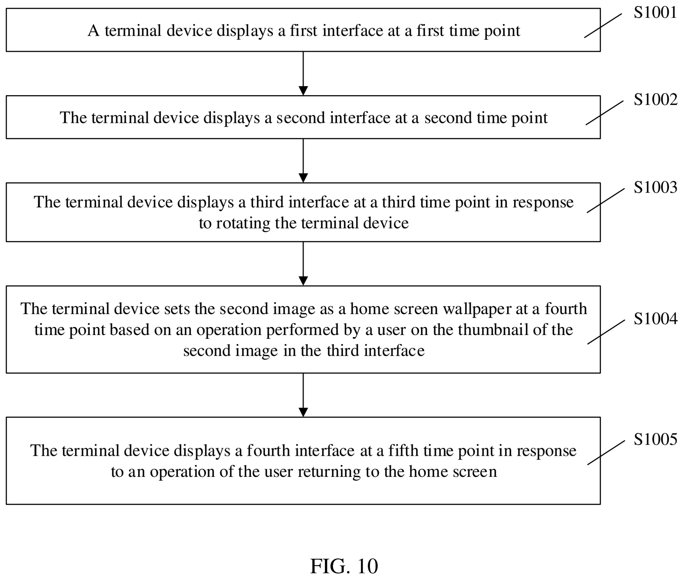

Based on the embodiment corresponding to FIG. 9A to FIG. 9C, FIG. 10 is a schematic flowchart of an interface display method according to an embodiment of this application. The home screen display method may include the following steps.

S1001: Display a first interface at a first time point,
where the first interface is a home screen, and a wallpaper of the first interface is a first image.

The first interface may be the interface shown in FIG. 6A, and the first image may be an image displayed on a home screen wallpaper shown in the interface in FIG. 6A.

S1002: Display a second interface at a second time point,
where the second interface includes a thumbnail of a second image, the second time point is later than the first time point, and a posture of a terminal device is not changed between the first time point and the second time point.

The second interface may be an interface displayed by the terminal device before screen rotation is performed, or may be an interface displayed when the terminal device is in a landscape state. Content displayed in the interface may be the same as the content displayed in the interface shown in FIG. 6B, and the second image may be an image indicated in the thumbnail 600. It may be understood that the first image may be the same or not the same as the second image.

When the first image is not the same as the second image, the interface shown in FIG. 6B may include a thumbnail 600 of the first image and a thumbnail 601 of the second image. In this case, because the first image is the home screen wallpaper, a thumbnail of the first image may be in a selected state, and a thumbnail of the second image may be in an unselected state.

S1003: In response to rotating the terminal device, display a third interface at a third time point,
where the third interface is an interface obtained by adapting the second interface to rotation of a display, and the third time point is later than the second time point.

The third interface may be an interface displayed by the terminal device in a portrait state, for example, the interface shown in FIG. 6B.

**In** response to rotating the terminal device, the terminal device performs the steps shown in S901 to S902. A system service initiates a sendconfigchange() invocation to a background application, to enable the second interface to be changed through rotation between the landscape state and the portrait state. The terminal device displays the third interface.

S 1004: Set, based on an operation performed by a user on a thumbnail of the second image in the third interface, the second image as a home screen wallpaper at a fourth time point,
where the fourth time point is later than the third time point.

The operation performed by the user on the thumbnail of the second image in the third interface may be an operation of the user setting the image corresponding to the thumbnail 601 in the interface as the wallpaper shown in FIG. 6B.

In response to the operation performed by the user on the thumbnail of the second image in the third interface, the terminal device performs the steps shown in S903 to S908. The system service initiates the sendconfigchange() invocation to the background application, to enable the home screen application to set the second image as the home screen wallpaper based on the configuration change information included in the sendconfigchange() invocation.

S 1005: In response to an operation of the user returning to the home screen, display a fourth interface at a fifth time point,
where the fourth interface is an interface obtained by adapting the first interface to rotation of the display and changing the wallpaper to the second image, the fifth time point is later than the fourth time point, a home screen application is not started again between the third time point and the fourth time point, the home screen application does not receive, between the fourth time point and the fifth time point, configuration change information sent by another module, and the home screen application receives the configuration change information between the third time point and the fourth time point.

For example, the fourth interface may be an interface displayed when the terminal device is in the portrait state, and the home screen layout displayed in the interface may be the same as the home screen layout displayed in the interface shown in FIG. 6A. Details are not described herein again.

**In** response to the operation of the user returning to the home screen, the terminal device performs the steps shown in S910 to S920. The system service does not initiate the sendconfigchange() invocation when determining that the home screen application has avoids_rro_relaunch, and actively initiates configuratinchanged() when determining that misresourcechange is true. The home screen application may obtain the configuration change information based on the configuratinchanged() invocation, and implement appropriate display of the home screen layout. For example, the terminal device displays, in the portrait state, the home screen layout displayed in a portrait mode.

Between the third time point and the fourth time point, the home screen application of the terminal device is in a background, and the home screen application is not started again.

That the home screen application does not receive, between the fourth time point and the fifth time point, the configuration change information sent by the another module may be understood as that the home screen application does not receive the configuration change information after the system service determines, when it is determined that the configuration item exists in S916, not to send sendconfigchange(). The another module may include the system service.

That the home screen application receives the configuration change information between the third time point and the fourth time point may be understood as that the home screen application obtains sendconfigchange() from the system service in S908.

That the home screen application obtains the configuration change information between the fourth time point and the fifth time point may be understood as that the home screen application obtains, based on configuratinchanged() actively initiated in S919, the configuration change information.

In a possible implementation, in addition to rotating the screen, a device folding change or a device unfolding change may trigger a similar display anomaly of the home screen.

For example, the terminal device is a first device having an outward-foldable screen, the fourth interface is an interface displayed on a first screen of the outward-foldable screen. After the displaying a fourth interface, the method further includes: displaying a fifth interface on the first screen at a sixth time point, where the fifth interface includes a thumbnail of the first image, and the sixth time point is later than the fifth time point; displaying a sixth interface on a second screen at a seventh time point in response to an operation of folding the first device, where the sixth interface is an interface obtained by adapting the fifth interface to folding of the display, the second screen is a portion of the first screen, and the seventh time point is later than the sixth time point; setting the first image as the home screen wallpaper at an eighth time point based on an operation performed by the user on the thumbnail of the first image in the sixth interface, where the eighth time point is later than the seventh time point; and displaying a seventh interface at a ninth time point in response to an operation of the user returning to the home screen, where the seventh interface is an interface obtained by adapting the fourth interface to folding of the display and changing the wallpaper to the first image, the ninth time point is later than the eighth time point, the home screen application is not started again between the seventh time point and the eighth time point, the home screen application does not receive, between the eighth time point and the ninth time point, the configuration change information sent by the another module, and the home screen application receives, between the seventh time point and the eighth time point, the configuration change information.

For the first screen and the second screen, refer to the description in FIG. 7A to FIG. 7D.

The fourth interface may further be the interface displayed in the first screen shown in FIG. 7A, and the fifth interface may be the interface that is displayed on the first screen of the first device shown in FIG. 6B. The sixth interface may be the interface displayed in the second screen shown in FIG. 7B, and the seventh interface may be an interface in which the second screen of the first device completely displays the content in the interface shown in FIG. 7A.

Because the solution for the layout anomaly of the home screen of the first device is similar to the solution for the layout anomaly of the home screen when the terminal device rotates, the steps performed by the first device in response to a different user operation are similar to those described in FIG. 10, and details are not described herein again.

In a possible implementation, the terminal device includes the system service and the home screen application. In response to rotating the terminal device, the method further includes: in response to rotating the terminal device, the method further includes: The system service initiates a first instruction to the home screen application, where the first instruction includes information for indicating screen rotation, and a type of a configchange object in the first instruction is a non-resource change type. After an operation performed by the user on a thumbnail of the second image in the third interface, the method further includes: The system service initiates a second instruction to the home screen application, where the second instruction includes the configuration change information, a type of a configchange object in the second instruction is a resource change type, and the home screen application sets a first flag bit to true.

The first instruction may be the sendconfigchange() invocation described in S802 or S902. The second instruction may be the sendconfigchange() invocation described in S808 or S908.

**In** a possible implementation, after in response to an operation of the user returning to the home screen, the method further includes: The home screen application obtains the configuration change information based on the first flag bit being true, and displays the fourth interface based on the configuration change information; and after the home screen application obtains the configuration change information, the home screen application sets the first flag bit to false.

The first flag bit may be misresourcechange.

In a possible implementation, a configuration item is configured in the home screen application, and before the obtaining, by the home screen application, the configuration change information, the method further includes: The system service notifies the home screen application to start the home screen; the system service obtains the configuration of the home screen application from the home screen application; and the system service does not send the configuration change information to the home screen application based on the configuration item included in the configuration in the home screen application.

The configuration item may be avoid_rro_relaunch.

In a possible implementation, before the displaying a first interface, the method further includes: before the displaying a first interface, the method further includes: displaying an eighth interface at a tenth time point, where the eighth interface includes a first button configured to determine setting of gesture navigation; setting the gesture navigation in response to an operation performed on the first button; displaying a ninth interface at an eleventh time point, where the ninth interface includes a second button configured to complete a startup wizard, and the eleventh time point is later than the tenth time point; in response to an operation performed on the second button, the terminal device starts the home screen application at a twelfth time point, where the twelfth time point is later than the eleventh time point; and completing, at a thirteenth time point, starting of the home screen application, where the home screen application is not started again between the twelfth time point and the thirteenth time point, and the home screen application does not receive, between the twelfth time point and the thirteenth time point, the configuration change information sent by the another module.

The eighth interface may be the interface shown in FIG. 3B, the first button may be the button 302, the ninth interface may be the interface shown in FIG. 3C, and the second button may be the button 303.

In response to the operation performed on the first button, the terminal device may perform the steps shown in S404. The system service initiates sendconfigchange() to the home screen application, but the system service does not initiate sendconfigchange() actually. In response to the operation performed on the second button, the terminal device performs the steps shown in S503 to S506, and determines, based on the configuration item, not to initiate sendconfigchange() to the home screen application.

Between the twelfth time point and the thirteenth time point, that the home screen application is not started again and does not receive the configuration change information sent by the another module may be understood that, because the system service determines, based on the configuration item, not to initiate sendconfigchange() to the home screen application and not to initiate the instruction for starting the home screen application, the home screen application does not receive sendconfigchange(), and is not started again.

In a possible implementation, the system service and the home screen application are configured in the terminal device, the configuration item is configured in the home screen application. After the twelfth time point, the method further includes: The system service notifies the home screen application to start the home screen; the system service obtains the configuration of the home screen application from the home screen application; and the system service does not send the configuration change information to the home screen application based on the configuration item included in the configuration in the home screen application.

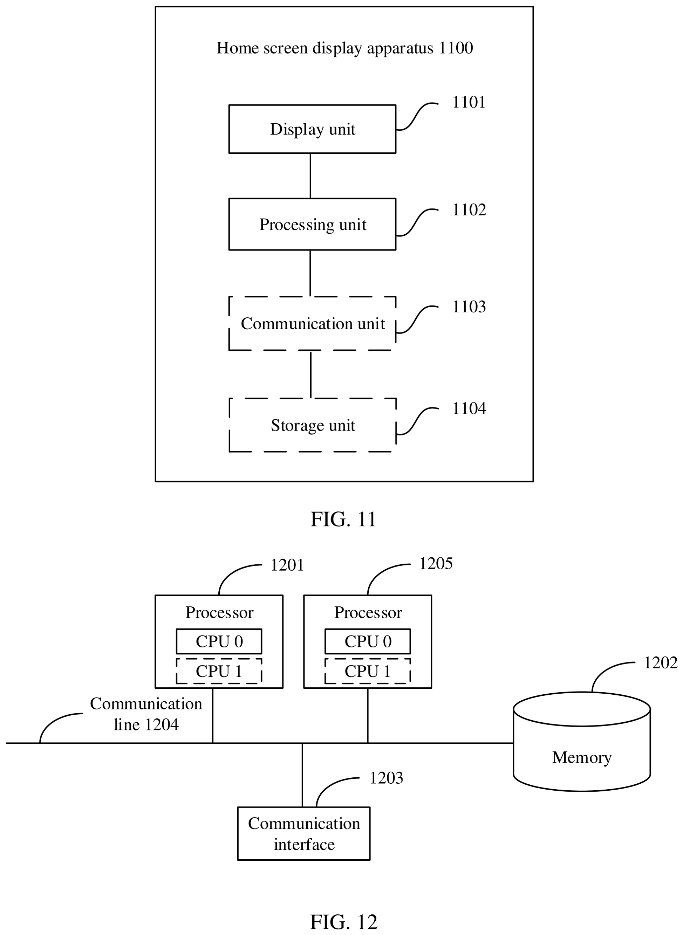

The method provided in embodiments of this application is described with reference to FIG. 3A to FIG. 3D to FIG. 10. The following describes an apparatus for performing the method provided in embodiments of this application. Refer to FIG. 11. FIG. 11 is a schematic diagram of a structure of a home screen display apparatus according to an embodiment of this application. The home screen display apparatus may be a terminal device in embodiments of this application, or may be a chip or a chip system in the terminal device.

As shown in FIG. 11, a home screen display apparatus 1100 may be applied to a communication device, a circuit, a hardware component, or a chip. The home screen display apparatus 1100 includes a display unit 1101 and a processing unit 1102. The display unit 1101 is configured to support a display step performed by the home screen display method. The processing unit 1102 is configured to support an information processing step performed by the home screen display apparatus 1100.

In a possible implementation, the home screen display apparatus 1100 may further include a communication unit 1103. The communication unit 1103 is configured to support a message receiving step or a message sending step performed by the home screen display apparatus 1100.

The home screen display apparatus described in this embodiment of this application may include the units described in the embodiment corresponding to FIG. 11.

Specifically, the processing unit 1102 may be integrated with the display unit 1101, and communication may occur between the processing unit 1102 and the display unit 1101.

In a possible implementation, the home screen display apparatus 1100 may further include a storage unit 1104. The storage unit 1104 may include one or more memories, and the memory may be a device in one or more devices or circuits that are configured to store a program or data.

The storage unit 1104 may exist independently, and is connected to the processing unit 1102 through a communication bus. The storage unit 1104 may be alternatively integrated with the processing unit 1102.

For example, the home screen display apparatus 1100 may be a chip or a chip system of the terminal device in this embodiment of this application, and the storage unit 1104 may store computer executable instructions of the method of the terminal device, so that the processing unit 1102 performs the method of the terminal device in the foregoing embodiment. The storage unit 1104 may be a register, a cache, a random access memory (random access memory, RAM), or the like. The storage unit 1104 may be integrated with the processing unit 1102. The storage unit 1104 may be a read-only memory (read-only memory, ROM) or another type of static storage device that may store static information and instructions. The storage unit 1104 may be independent of the processing unit 1102.

In a possible implementation, the home screen display apparatus 1100 may further include a communication unit 1103. The communication unit 1103 is configured to support interaction between the home screen display apparatus 1100 and another device. For example, when the home screen display apparatus 1100 is a terminal device, the communication unit 1103 may be a communication interface or an interface circuit. When the home screen display apparatus 1100 is a chip or a chip system in a terminal device, the communication unit 1103 may be a communication interface. For example, the communication interface may be an input/output interface, a pin, a circuit, or the like.

The apparatus in this embodiment may be correspondingly configured to perform the steps performed in the foregoing method embodiments. Implementation principles and technical effects thereof are similar. Details are not described herein again.

FIG. 12 is a schematic diagram of a hardware structure of another terminal device according to an embodiment of this application.

The terminal device may include a processor 1201, a communication line 1204, and at least one communication interface (for example, a communication interface 1203 is used as an example for description in FIG. 12).

The processor 1201 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1204 may include a circuit for transferring information between the foregoing components.

The communication interface 1203 is any apparatus such as a transceiver, and is configured to communicate with another device or communication network such as the Ethernet, or a wireless local area network (wireless local area networks, WLAN).

Possibly, the terminal device may further include a memory 1202.

The memory 1202 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer, but not limited thereto. The memory may exist independently, and be connected to the processor by using the communication line 1204. The memory may alternatively be integrated with the processor.

The memory 1202 is configured to store computer-executable instructions for performing the solutions of this application, and the processor 1201 controls execution. The processor 1201 is configured to execute the computer-executable instructions stored in the memory 1202, to implement the method provided in embodiments of this application.

Possibly, the computer executable instructions in this embodiment of this application may also be referred to as application code. This is not specifically limited in this embodiment of this application.

During a specific implementation, in an embodiment, the processor 1201 may include one or more CPUs, for example, a CPU 0 and a CPU 1 in FIG. 12.

In a specific implementation, in an embodiment, the terminal device may include a plurality of processors, for example, the processor 1201 and a processor 1205 in FIG. 12. Each of these processors may be a single-core (single-CPU) processor, or may be a multi-core (multi-CPU) processor. The processor herein may be one or more devices, circuits, and/or processing cores configured to process data (for example, computer program instructions).

In the foregoing embodiments, the instructions executed by the processor and stored in the memory may be implemented in the form of a computer program product. The computer program product may be pre-written in the memory, or may be downloaded and installed in the memory in the form of software.

A computer program product includes one or more computer instructions. When the computer program instructions are loaded and executed on a computer, some or all of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device including a server, a data center, or the like that integrates one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

An embodiment of this application further provides a computer-readable storage medium. The methods described in the foregoing embodiments may be all or partially implemented by software, hardware, firmware, or any combination thereof. The computer-readable medium may include a computer storage medium and a communication medium, and may further include any medium that enables a computer program to be transmitted from a place to another place. The storage medium may be any target medium that can be accessed by a computer.

**In** a possible design, the computer-readable medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Moreover, any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared, radio, and microwave are included in the definition of the medium. A magnetic disk and an optical disc as used in this specification include a compact disc (CD), a laser disc, an optical disc, a digital versatile disc (digital versatile disc, DVD), a floppy disk, and a blue ray disc. The magnetic disk generally reproduces data in a magnetic manner, and the optical disc reproduces data optically by using laser.

A combination of the foregoing should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

It should be noted that user information (including but not limited to user equipment information, user personal information, and the like) and data (including but not limited to data used for analysis, stored data, displayed data, and the like) involved in this application are all information and data that are authorized by the user or that are fully authorized by each party. In addition, collection, use, and processing of the related data need to comply with related laws, regulations, and standards, and a corresponding operation entry is provided for the user to choose to authorize or reject.

## Claims

1. A home screen display method, applied to a terminal device, wherein the method comprises:
displaying a first interface at a first time point, wherein the first interface is a home screen, and a wallpaper of the first interface is a first image;
displaying a second interface at a second time point, wherein the second interface comprises a thumbnail of a second image, the second time point is later than the first time point, and a posture of the terminal device is not changed between the first time point and the second time point;
displaying a third interface at a third time point in response to rotation of the terminal device, wherein the third interface is an interface obtained by adapting the second interface to rotation of a display, and the third time point is later than the second time point;
setting the second image as a home screen wallpaper at a fourth time point based on an operation performed by a user on the thumbnail of the second image in the third interface, wherein the fourth time point is later than the third time point; and
displaying a fourth interface at a fifth time point in response to an operation of the user returning to the home screen, wherein the fourth interface is an interface obtained by adapting the first interface to rotation of the display and changing the wallpaper to the second image, the fifth time point is later than the fourth time point, a home screen application is not started again between the third time point and the fourth time point, the home screen application does not receive, between the fourth time point and the fifth time point, configuration change information sent by another module, and the home screen application receives, between the third time point and the fourth time point, configuration change information.

2. The method according to claim 1, wherein the terminal device is a first device having an outward-foldable screen, the fourth interface is an interface displayed on a first screen of the outward-foldable screen, and after the displaying a fourth interface, the method further comprises:
displaying a fifth interface on the first screen at a sixth time point, wherein the fifth interface comprises a thumbnail of the first image, and the sixth time point is later than the fifth time point;
displaying a sixth interface on a second screen at a seventh time point in response to an operation of folding the first device, wherein the sixth interface is an interface obtained by adapting the fifth interface to folding of the display, the second screen is a portion of the first screen, and the seventh time point is later than the sixth time point;
setting the first image as the home screen wallpaper at an eighth time point based on an operation performed by the user on the thumbnail of the first image in the sixth interface, wherein the eighth time point is later than the seventh time point; and
displaying a seventh interface at a ninth time point in response to an operation of the user returning to the home screen, wherein the seventh interface is an interface obtained by adapting the fourth interface to folding of the display and changing the wallpaper to the first image, the ninth time point is later than the eighth time point, the home screen application is not started again between the seventh time point and the eighth time point, the home screen application does not receive, between the eighth time point and the ninth time point, the configuration change information sent by the another module, and the home screen application receives, between the seventh time point and the eighth time point, the configuration change information.

3. The method according to claim 1, wherein the second interface comprises a thumbnail of the first image, the thumbnail of the first image comprises a selected mark, and the thumbnail of the second image does not comprise the selected mark.

4. The method according to any one of claims 1 to 3, wherein a system service and the home screen application are configured in the terminal device;
after the response to rotation of the terminal device, the method further comprises: initiating, by the system service, a first instruction to the home screen application, wherein the first instruction comprises information for indicating screen rotation, and a type of a configchange object in the first instruction is a non-resource change type; and
after the operation performed by the user on the thumbnail of the second image in the third interface, the method further comprises: initiating, by the system service, a second instruction to the home screen application, wherein the second instruction comprises the configuration change information, and a type of a configchange object in the second instruction is a resource change type; and setting, by the home screen application, a first flag bit to true.

5. The method according to claim 4, wherein the setting, by the home screen application, a first flag bit to true comprises:
setting, by the home screen application, the first flag bit to true based on the type of the configchange object in the second instruction being the resource change type.

6. The method according to claim 4 or 5, wherein after the response to an operation of the user returning to the home screen, the method further comprises:
obtaining, by the home screen application, the configuration change information based on the first flag bit being true, and displaying the fourth interface based on the configuration change information; and
after the obtaining, by the home screen application, the configuration change information, setting, by the home screen application, the first flag bit to false.

7. The method according to claim 6, wherein a configuration item is configured in the home screen application, and before the obtaining, by the home screen application, the configuration change information, the method further comprises:
notifying, by the system service, the home screen application to start the home screen;
obtaining, by the system service, a configuration of the home screen application from the home screen application; and
skipping sending, by the system service, the configuration change information to the home screen application based on the configuration item being comprised in the configuration of the home screen application.

8. The method according to any one of claims 1 to 7, wherein before the displaying a first interface, the method further comprises:
displaying an eighth interface at a tenth time point, wherein the eighth interface comprises a first button for confirming setting gesture navigation;
setting the gesture navigation in response to an operation performed on the first button;
displaying a ninth interface at an eleventh time point, wherein the ninth interface comprises a second button for completing a startup wizard, and the eleventh time point is later than the tenth time point;
starting, by the terminal device, the home screen application at a twelfth time point in response to an operation performed on the second button, wherein the twelfth time point is later than the eleventh time point; and
completing, starting of the home screen application at a thirteenth time point, wherein the home screen application is not started again between the twelfth time point and the thirteenth time point, and the home screen application does not receive, between the twelfth time point and the thirteenth time point, the configuration change information sent by the another module.

9. The method according to claim 8, wherein the system service and the home screen application are configured in the terminal device, the configuration item is configured in the home screen application, and after the twelfth time point, the method further comprises:
notifying, by the system service, the home screen application to start the home screen;
obtaining, by the system service, the configuration of the home screen application from the home screen application; and
skipping sending, by the system service, the configuration change information to the home screen application based on the configuration item being comprised in the configuration in the home screen application.

10. A terminal device, comprising a processor and a memory, wherein
the memory is configured to store a computer program; and
the processor is configured to invoke and execute the computer program, to enable the terminal device to perform the method according to any one of claims 1 to 9.

11. A computer-readable storage medium, configured to store a computer program, wherein when the computer program is run on a computer, the computer is enabled to perform the method according to any one of claims 1 to 9.
